(19) Europäisches Patentamt
European Patent Office
Office européen des brevets

(11) Publication number: **0 430 722 A2**

(12) **EUROPEAN PATENT APPLICATION**

(21) Application number: **90313122.5**

(22) Date of filing: **03.12.90**

(51) Int. Cl.5: **H01B 3/44**, H01B 3/40, C08G 65/22, C08G 59/30, C08F 14/18, C08F 114/18, C08F 214/18

(30) Priority: **01.12.89 JP 312403/89**
**27.04.90 JP 110177/90**

(43) Date of publication of application:
**05.06.91 Bulletin 91/23**

(84) Designated Contracting States:
**DE GB Bulletin**

(71) Applicant: **DAINIPPON INK AND CHEMICALS, INC.**
**35-58, Sakashita 3-chome**
**Itabashi-ku Tokyo(JP)**

(72) Inventor: **Hashimoto, Yutaka**
**4-208, 21-ban, 4-cho, Momoyamadai**
**Sakia-shi, Osaka-fu(JP)**
Inventor: **Shirakami, Jun**
**218-697, Ogaito, Kumatori-cho**
**Sennan-gun, Osaka-fu(JP)**
Inventor: **Kamei, Masayuki**
**201, 4-1 Shinkanaoka-cho 3-chome**
**Sakai-shi, Osaka-fu(JP)**

(74) Representative: **Myerscough, Philip Boyd et al**
**J.A.Kemp & Co. 14, South Square Gray's Inn**
**London, WC1R 5EU(GB)**

(54) **Curable insulating material.**

(57) A curable insulating material comprising a polyfluoroalkyl group-containing ethylenically mono alpha, beta-unsaturated monomer or a polyfluoroalkyl group-containing monoepoxy monomer.

EP 0 430 722 A2

## CURABLE INSULATING MATERIAL

This invention relates to a curable insulating material.

Japanese Laid-Open Patent Publication No. 249,744/1989 and European Laid-Open Patent Publication Nos. 309,783 and 322,624 disclose curable insulating materials comprising a poly(meth)acrylate monomer containing fluorine atom(s).

However, electric wires covered with the cured products of curable insulating materials discloses in the above publications only had an insufficient insulating performance.

Thus, an object of the invention is to provide an improved curable insulating material.

As a result of vigorous study to attain the above object, the present inventors found that an electric wire covered with a curable insulating material comprising a polyfluoroalkyl group-containing mono(meth)acrylate monomer or a polyfluoroalkyl group-containing monoepoxide insulating performance.

Thus, according to the invention there are provided a curable insulating mateiral containing a polyfluoroalkyl group-containing ethylenically mono alpha,beta-unsaturated monomer or a polyfluoroalkyl group-containing monoepoxy monomer; an insulated covered electric wire wherein an electric wire is covered with the cured product of the curable insulating material; and a process for preparation of an insulated covered electric wire which comprises coating an electric conductor with the curable insulating material, and then irradiating the coat with an active energy ray to cure the material.

In the invention, the polyfluoroalkyl group-containing ethylenically mono alpha,beta-unsaturated monomer means a monomer having one polymerizable ethylenically alpha,beta-unsaturated group and having at least one polyfluoroalkyl group, and the polyfluoroalkyl group containing monoepoxy monomer means a monomer having one polymerizable epoxy group and at least one polyfluoroalkyl group.

These polymerizable monomers include those having a thermosetting property and those having an active energy ray-curable property.

In view of insulating performance the content of fluorine atom in the whole weight of an insulating material of the invention is usually 3 % by weight or more, preferably l0 % by weigh or more.

Cruings of the polyfluoroalkyl group-containing ethylenically mono alpha,beta-unsaturated monomer and the polyfluoroalkyl group-containing monoepoxy monomer, contained as an indispensable component in the insulating material of the invention, progress by a radical polymerization mechanism and by a cation polymerization mechanism, respectively, but the insulating material of the invention may be a combination system of a radical polymerization mechanism and a cation polymerization mechanism.

The radical polymerization system and the cation polymerization system are described below in this order.

In case of the radical polymerization system, the insulating material of the invention is chiefly composed of the above polyfluoroalkyl group-containing ethylenically mono alpha,beta-unsaturated monomer, and if desired, a polyfluoroalkyl group-not containing ethylenically mono alpha,beta-unsaturated monomer and an ethylenically poly alpha,beta-unsaturated monomer are used.

In case of the radical polymerization system, the respective polymerizable groups of the polyfluoroalkyl group-containing ethylenically mono alpha,beta-unsaturated monomer, the polyfluoroalkyl group-not containing ethylenically mono-alpha,beta-unsaturated monomer and the ethylenically poly alpha,beta-unsaturated monomer are not particularly limited so long as they are ethylenically alpha,beta-unsaturated groups, but in view of polymerization curability is preferred a polymerizable monomer containing a methacryloyl group, acryloyl group, haloacryloyl group or cyanoacryloyl group or an ethylenically alpha,beta-unsaturated group-containing dicarboxylic acid ester.

Hereinafter, unless otherwise particularly noted, the methacryloyl group, acryloyl group, haloacryloyl group and cyanoacryloyl group are generically referred to as "an acryloyl group", the polymerizable monomer containing a methacryloyl group, acryloyl group, haloacryloyl group or cyanoacryloyl group is generically referred to as "an acryloyl group-containing polymerizable monomer", and a methacrylate, an acrylate, a haloacrylate and a cyanoacrylate are generically referred to as "an acrylate". Among the specific compounds listed by way of examples, "(meth)acrylates" stands for all of acrylate, methacrylate, haloacrylate and cyanoacrylate.

The polyfluoroalkyl group-containing mono alpha,beta-unsaturated monomer includes, for example, a polymerizable monomer (I-a) containing in the molecule polyfluoroalkyl group(s) and containing one acryloyl group (hereinafter referred to as a fluorine-containing monoacrylate).

The fluorine-containing monoacrylate (I-a) includes, for example, one wherein perfluoroalkyl group(s) or particularly fluorinated aliphatic group(s) each having 1 to 20 carbon atoms is(are) linked to an acryloyl group via divalent linkage group(s), and there can be mentioned compounds represented by the general

formula

$$CH_3=\underset{}{\overset{R_1}{\overset{|}{C}}}-\underset{\underset{O}{\|}}{C}-O-(X)_a-R_f \qquad \text{(I-a)}$$

[wherein $R_f$ is a perfluoroalkyl group or partially fluorinated aliphatic group having 1 to 20 carbon atoms, or may be one wherein oxygen atom(s) intervene(s) in the main chain, for example,

$-(CF_2\underset{\underset{CF_3}{|}}{C}FO)_2-CF(CF_3)_2$, etc., $R_1$ is H, $CH_3$, Cl, F or CN, X is a divalent linkage group, specifically $-(CH_2)_n-$, $-CH_2\underset{\underset{OH}{|}}{C}H-(CH_2)_n-$, $-(CH_2)_n-\overset{\overset{R_2}{|}}{N}SO_2-$, $-(CH_2)_n-\overset{\overset{R_2}{|}}{N}CO-$ (wherein, n is an integer of 1 to 10, and $R_2$ is H or an alkyl gropu having 1 to 6 carbon atoms),

$-\underset{\underset{CH_3}{|}}{C}H-$, $-\underset{\underset{CH_2CH_3}{|}}{C}H$ , $-\overset{\overset{CH_3}{|}}{\underset{\underset{CH_3}{|}}{C}}-$ , $-\overset{\overset{CF_3}{|}}{\underset{\underset{H}{|}}{C}}-$ , $-\overset{\overset{CF_3}{|}}{\underset{\underset{CF_3}{|}}{C}}-$ , $-\overset{\overset{CF_3}{|}}{\underset{\underset{CH_3}{|}}{C}}-$

or the like, and a is 0 or 1] and compounds having in the molecule plural perfluoroalkyl groups, for example, compounds represented by the general formula

$$CH_2=\underset{\underset{CH_2CH_2C_\ell F_{2\ell+1}}{|}}{C}-COOCH_2CH_3C_\ell F_{2\ell+1}$$

[wherein $\ell$ is an integer of 1 to 14].

The following compounds are mentioned as specific examples of them:

I-a-1: $CH_2{=}CHCOOCH_2CH_2C_8F_{17}$

I-a-2:

$$\begin{array}{l} \quad\;\; CH_3 \\ \quad\;\;\; | \\ CH_2{=}CCOOCH_2CH_2C_8F_{17} \end{array}$$

I-a-3: $CH_2{=}CHCOOCH_2CH_2C_{12}F_{25}$

I-a-4:

$$\begin{array}{l} \quad\;\; CH_3 \\ \quad\;\;\; | \\ CH_2{=}CCOOCH_2CH_2C_{12}F_{25} \end{array}$$

I-a-5: $CH_2{=}CHCOOCH_2CH_2C_{10}F_{21}$

I-a-6:

$$\begin{array}{l} \quad\;\; CH_3 \\ \quad\;\;\; | \\ CH_2{=}CCOOCH_2CH_2C_{10}F_{21} \end{array}$$

I-a-7: $CH_2{=}CHCOOCH_2CH_2C_6F_{13}$

I-a-8: $\quad CH_3$
$CH_2=\overset{|}{C}COOCH_2CH_2C_6F_{13}$

I-a-9: $CH_2=CHCOOCH_2CH_2C_4F_9$

I-a-10: $\quad F$
$CH_2=\overset{|}{C}COOCH_2CH_2C_6F_{13}$

I-a-11: $\quad CH_3$
$CH_2=\overset{|}{C}COOCH_2CH_2C_{20}F_{41}$

I-a-12: $\quad Cl$
$CH_2=\overset{|}{C}COOCH_2CH_2C_4F_9$

I-a-13: $\quad CH_3$
$CH_2=\overset{|}{C}COO-(CH_2)_6-C_{10}F_{21}$

I-a-14: $\quad CH_3$
$CH_2=\overset{|}{C}HCOOCH_2CF_3$

I-a-15: $CH_2=CHCOOCH_2CF_3$

I-a-16: $CH_2=CHCOOCH_2C_8F_{17}$

I-a-17: $\quad CH_3$
$CH_2=\overset{|}{C}COOCH_2C_8F_{17}$

I-a-18: $\quad CH_3$
$CH_2=\overset{|}{C}COOCH_2C_{20}F_{41}$

I-a-19: $CH_2=CHCOOCH_2C_{20}F_{41}$

I-a-20: $\quad CH_3$
$CH_2=\overset{|}{C}COOCH_2CF(CF_3)_2$

I-a-21: $\quad CH_3$
$CH_2=\overset{|}{C}COOCH_2CFHCF_3$

I-a-22: $\quad F$
$CH_2=\overset{|}{C}COOCH_2C_2F_5$

I-a-23: $CH_2=CHCOOCH_2-(CH_2)_6-CF(CF_3)_2$

I-a-24: $\quad CH_3$
$CH_2=\overset{|}{C}COO\underset{\underset{CH_3}{|}}{C}HCF_2CFHCF_3$

I-a-25: $\quad CH_3$
$CH_2=\overset{|}{C}COO\underset{\underset{C_2H_5}{|}}{C}HC_{10}F_{21}$

I-a-26: $CH_2=CHCOOCH_2-(CF_2)_2-H$

I-a-27: $\quad CH_3$
$CH_2=\overset{|}{C}COOCH_2-(CF_2)_2-H$

I-a-28: $CH_2=CHCOOCH_2-(CF_2)_4-H$

I-a-29: $CH_2=CHCOOCH_2CF_3$

I-a-30:
$CH_3$
$CH_2=CCOO-(CF_2)_4-H$

I-a-31: $CH_2=CHCOOCH_2-(CF_2)_6-H$

I-a-32:
$CH_3$
$CH_2=CHCOOCH_2-(CF_2)_6-H$

I-a-33: $CH_2=CHCOOCH_2-(CF_2)_8-H$

I-a-34:
$CH_3$
$CH_2=CHCOOCH_2-(CF_2)_8-H$

I-a-35: $CH_2=CHCOOCH_2-(CF_2)_{10}-H$

I-a-36: $CH_2=CHCOOCH_2-(CF_2)_{12}-H$

I-a-37: $CH_2=CHCOOCH_2-(CF_2)_{14}-H$

I-a-38: $CH_2=CHCOOCH_2-(CF_2)_{18}-H$

I-a-39:
$CH_3$
$CH_2=CHCOOC-(CF_2)_4-H$
$CH_3$

I-a-40: $CH_2=CHCOOCH_2CH_3-(CF_2)_7-H$

I-a-41:
$CH_3$
$CH_2=CHCOOCH_2CH_2-(CF_2)_7-H$

I-a-42:
$CH_3$ $CH_3$
$CH_2=CCOO-C-(CF_2)_6-H$
$CH_3$

I-a-43: $CH_2=CHCOO-CHC_8F_{17}$
$CF_3$

I-a-44: $CH_2=CHCOOCH_2C_2F_5$

I-a-45: $CH_2-CHCOOCH_2CHCH_2C_8F_{17}$
OH

I-a-46:
$CH_3$
$CH_2=CCOOCH_2CH-(CH_2)_4-C_{18}F_{37}$
OH

I-a-47:
$C_3H_7$
$CH_2=CHCOOCH_2CH_2NSO_2C_8F_{17}$

I-a-48:
$CH_3$ $C_3H_7$
$CH_2=CCOOCH_2CH_2NSO_2C_6F_{13}$

I-a-49: $CH_2=C(Cl)COO-(CH_2)_6-N(H)SO_2C_{12}F_{25}$

I-a-50: $CH_2=CHCOOCH_2CH_2N(C_2H_5)COC_7F_{15}$

I-a-51: $CH_2=CHCOO-(CH_2)_8-N(CH_3)COC_{12}F_{25}$

I-a-52: $CH2=C(CH_2CH_2C_6F_{17})\ COOCH_2CH_2C_8F_{17}$

The fluorine-containing monoacrylate (I-a) may be a mixture of two or more compounds having a different structure. It is a matter of course that the invention is not limited at all by the above specific examples, and a polyfluoroalkyl group-containing ethylenically alpha,beta-unsaturated dicarboxylic acid ester, as hereinafter mentioned, can also be used.

As a polymerizable monomer which can be used together with the above polyfluoroalkyl group-containing ethylenically mono alpha,beta-unsaturated monomer, an ethylenically poly alpha,beta-unsaturated monomer can, for example, be mentioned.

The ethylenically poly alpha,beta-unsaturated monomer in the invention means a monomer containing at least two polymerizable ethylenically alpha,beta-unsaturated groups.

The ethylenically poly alpha,beta-unsaturated monomer is roughly classified into a polyfluoroalkyl group- or polyfluoroalkylene group-containing ethylenically poly alpha,beta-unsaturated monomer, and a polyfluoroalkyl group- or polyfluoroalkylene group-not containing ethylenically poly alpha,beta-unsaturated monomer.

Among them, as the polyfluoroalkyl group- or polyfluoroalkylene group-containing ethylenically poly alpha,beta-unsaturated monomer, there can, for example, be mentioned a polymerizable monomer (I-b) containing polyfluoroalkyl group(s) or polyfluoroalkylene group(s) and containing at least two acryloyl groups (hereinafter referred to as a fluorine-containing polyfunctional acrylate).

As fluorine-containing polyfunctional acryaltes (I-b), there can be mentioned compounds represented by the general formula

$$CH_2=C(R_1)-COO-(CH_2)_X-(CF_2)_Y-(CH_2)_X-OOCC(R_1)=CH \quad (I\text{-}b)$$

[wherein X represents an integer of 1 or 2, Y represents an integer of 4 to l2, and $R_1$ is as defined above]. The following compounds are exemplified as specific compounds thereof:

I-b-1: $CH_2=CHCOOCH_2-(C_2F_4)_2-CH_2OCOCH=CH_2$

I-b-2: $CH_2=CHCOOCH_2H_4-(C_2F_4)_3-C_2H_4OCOCH=CH_2$

I-b-3: $CH_2=C(CH_3)COOC_2H_4-(C_2F_4)_3-C_2H_4OCOC(CH_3)=CH_2$

I-b-4: $CH_2=C(F)COOC_2H_4-(C_2F_4)_3-C_2H_4OCOC(F)=CH_2$

I-b-5: $CH_2=CHCOOC_2H_4-(CF(CF_3)CF)_4-C_2H_4OCOCH=CH_2$

I-b-6: $CH_2=C(CN)COOCH_2-(C_2F_4)_3-CH_2OCOC(CN)=CH_2$

I-b-7: $CH_2=C(Cl)COOC_2H_4-(C_2F_4)_4-C_2H_4OCOC(Cl)=CH_2$

I-b-8: $CH_2=CHCOOC_2H_4-(C_2F_4)_a-(CF(CF_3)CF_2)_b-C_2H_4OCOCH=CH_2$

(wherein a and b are integers of 1 to 4)

As other fluoride-containing polyfunctional acrylates, there can be mentioned compounds represented by the general formula

$$CH_2=C(R_1)COOCH_2CH(OH)CH_2OR_f'\ OCH_2CH(OH)CH_2OCOC(R_1)=CH_2$$

[wherein $R_1$ is as defined above, and $R_f'$ is $-(CH_2)_X-(CF_2)_Y-(CH_2)_X-$ (wherein X and Y are as defined above) (I-b-9),

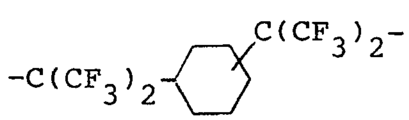 (I-b-10),

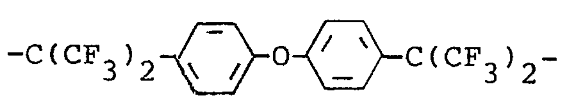 (I-b-11),

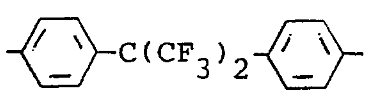 (I-b-12) or

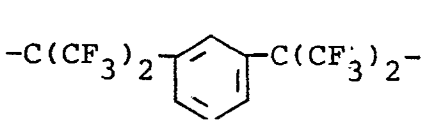 (I-b-13)], and those disclosed in Japanese Laid-Open Patent Publication No9. 249744/1989 and European Laid-Open Patent Publication Nos. 309783 and 322624.

The fluorine-containing polyfunctional acrylate (1-b) is important together with the fluorine-containing monoacrylate, to manifest an insulating performance and give flame retardancy, and also important to

manifest mechanical strength in a degree enough for practical use. It is a matter of course that the invention is not limited all by the above specific examples.

The ethylenically alpha,beta-unsaturated dicarboxylic acid or its ester is roughly classified into one containing polyfluoroalkyl group(s) and one containing no polyfluoroalkyl group. The ethylenically alpha,beta-unsaturated dicarboxylic acid or its ester containing polyfluoroalkyl group(s) is the polyfluoroalkyl group-containing ethylenically alpha,beta-unsaturated monomer as an indispensable component of the insulating material of the invention.

As the polylfuoroalkyl group-not containing ethylenically alpha,beta-unsaturated dicarboxylic acid, there can, for example, be mentioned

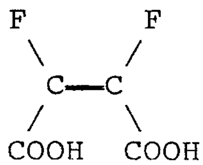 , 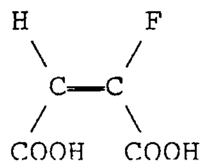 and 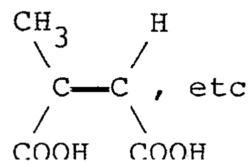 , etc.

As ethylenically alpha,beta-unsaturated dicarboxylic acid esters, there can, for example, be mentioned compounds represented by the general formula $R_5OOC(R_3)C=C(R_4)COOR_6$ (II) [wherein $R_3$ and $R_4$ are H, F, Cl, CN or $CH_3$, $R_3$ and $R_4$ may be the same or different, and $R_5$ and $R_6$ are alkyl groups having 1 to 20 carbon atoms or groups containing fluorinated alkyl groups), and although $R_5$ and $R_6$ may be the same or different, when one of them is H, the other fis a group other than H.], and as specific compounds including those containing polyfluoroalkyl group(s) and those containing no polyfluoroalkyl group, the following compounds can, for example, be mentioned:

II-1: Fumaric acid diethyl ester
11-2: Fumaric acid di-n-butyl ester
II-3: Fumaric acid di-iso-butyl ester
II-4: Fumaric acid di-t-butyl ester
II-5: Fumaric acid dipropyl ester
II-6: Fumaric acid di-2-ethylhexyl ester
II-7: Fumaric acid dihexyl ester
II-8: Fumaric acid ethyl butyl ester
II-9: Maleic acid dibutyl ester
II-10: Maleic acid dioleyl ester
II-11: Fumaric acid n-butyl t-butyl ester
II-12: Fumaric acid ethyl isobutyl ester

II-13: 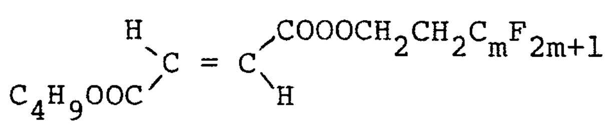

(wherein m is an integer of 1 to 18)

II-14:

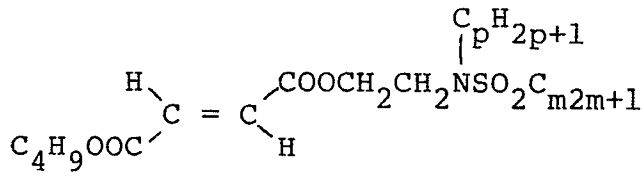

(p is an integer of 1 to 20, m is as defined above)

II-15:

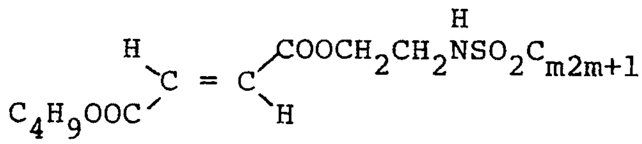

(m is as defined above)

II-16:

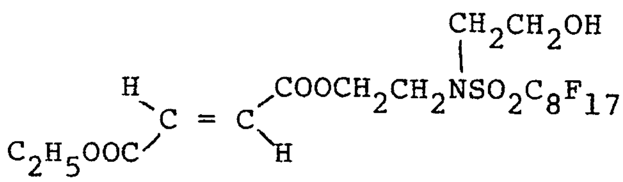

II-17:

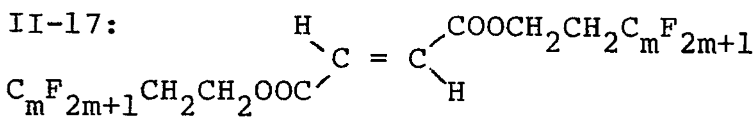

(m is as defined above)

II-18:

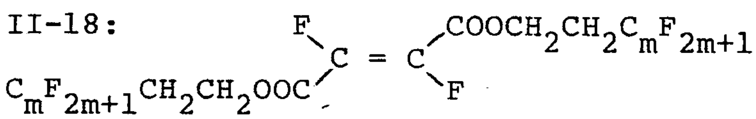

(m is as defined above)

II-19:

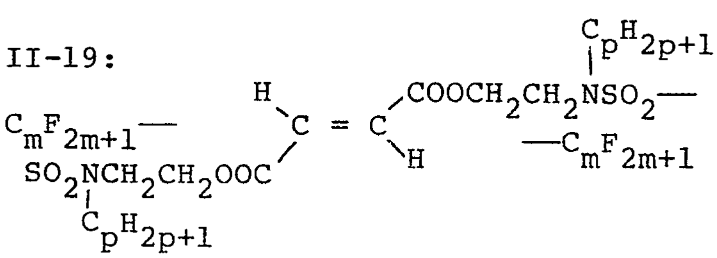

(p and m are as defined above)

II-20:

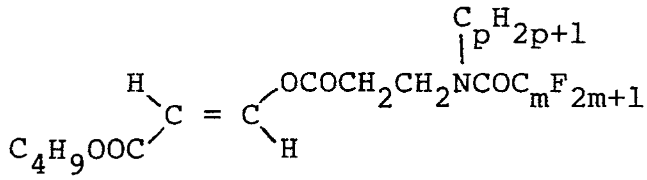

(p and m are as defined above)

II-21:

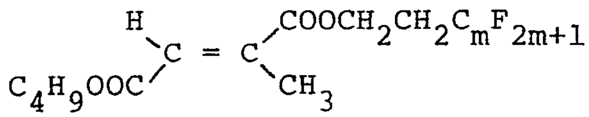

(m is as defined above)

II-22:

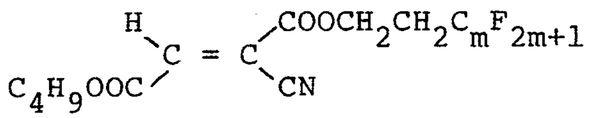

(m is as defined above)

II-23:

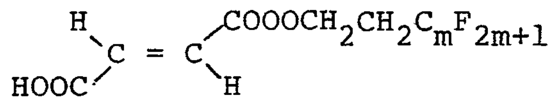

(m is as defined above)

II-24:

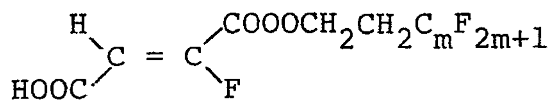

(m is as defined above)

II-25:

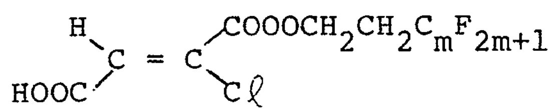

(m is as defined above)

II-26: 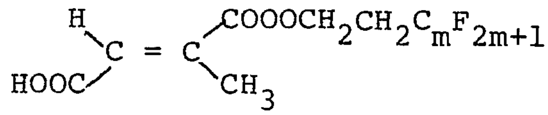

(m is as defined above)

II-27: Fumaric acid mono-n-butyl ester

II-28: Fumaric acid mono-n-ethylhexyl ester

II-29: Maleic acid monooleyl ester

II-30: 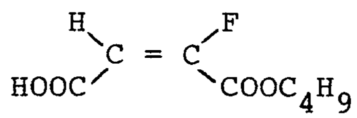

II-31: 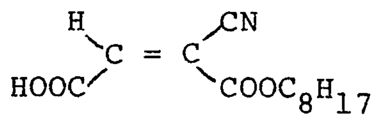

II-32: 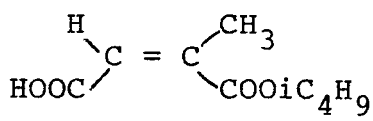

The ethylenically alpha,beta-unsaturated dicarboxylic acid or its ester (II) is important to manifest the mechanical strength and particularly flexibility of the insulator obtained by curing of the insulating material of the invention.

As polymerizable components of the insulating material of the invention,a polyfluoroalkyl group-not containing monoacrylate and a polyfluoroalkyl-not containing polyfunctional acrylate are preferably used besides the above respective monomers.

Polyfluoroalkyl group-not containing monoacrylates are, for example, compounds represented by the general formula

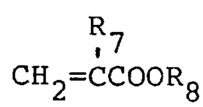 (III)

[wherein $R_7$ is H, F, Cl, CN or $CH_3$, and $R_8$ is a group having 1 to 20 carbon atoms], and specific examples thereof include, for example, the following compounds:

Methyl (meth)acrylates, ethyl (meth) acrylates, n-propyl (meth)acrylates, i-propyl (meth)acrylates, n-butyl (meth)acrylates, i-butyl (meth)acrylates, t-butyl (meth)acrylates, hexyl (meth)acrylates, octyl (meth)-acrylates, decyl (meth)acrylates, isodecyl (meth)acrylates, lauryl (meth)acrylates, stearyl (meth)acrylates, isostearyl (meth)acrylates, glycerol (meth)acrylates, 2-hydroxypropyl (meth)acrylates, 3-chloro-2-hydroxypropyl (meth)acrylates, glycidyl (meth)acrylates, allyl (meth)acrylates, butoxyethyl (meth)acrylates, butoxyethylene glycol (meth)acrylates, butoxyethylene glycol (meth)acrylates, N,N-diethylaminoethyl (meth)-acrylates, N,N-diethylaminoethyl (meth)acrylates, 2-ethylhexyl (meth)acrylates, gammamethacryloxypropyltrimethoxysilane, 2-methoxyethyl (meth)acrylates, methoxydiethylene glycol (meth)acrylates, methoxydipropylene glycol (meth)acrylates, nonylphenoxypolyethylene glycol (meth)acrylates, snonylphenoxypolypropylene glycol (meth)acrylates, Aronix M-5700 (produced by Toagosei Chemical Industry Co., Ltd.), phenoxyethyl (meth)acrylates, phenoxypropylene glycol (meth)acrylates, phenoxydipropylene glycol (meth)-acrylates, phenoxypolypropylene glycol (meth)acrylates, AR-260, MR-260, AR-200, AR-204, AR-208, MR-200, MR-204 and MR-208 (these are produced by Daihachi Chemical Co., Ltd.), and other phosphoric acid ester group-containing (meth)acrylates; and Biscoat 2000 and 2308 (produced by Osaka Yuki Co., Ltd.), polybutadiene (meth)acrylates, polyethylene glycol (meth)acrylates, polypropylene glycol (meth)acrylates,

polyethylene glycol-polypropylene glycol (meth)acrylates, polyethylene glycol-polybutylene glycol (meth)-acrylates, polystyrylethyl (meth)acrylates, Light ester HOA-MS and HOMS (produced by Kyoei Yushi Co., Ltd.), benzyl (meth)acrylates, cyclohexyl (meth)acrylates, dicyclopentanyl (meth)acrylates, dicyclopentenyl (meth)acrylates, isobornyl (meth)acrylates, methoxylated cyclodecatriene (meth)acrylates, phenyl (meth)-acrylates, FA-512A and -512M (produced by Hitachi Chemical Co., Ltd.), gamma-methacryloxypropyl-methyldimethoxysilane, gamma-acryloxypropyltrimethoxysilane, gamma-acryloxypropylmethyldimethox-ysilane,

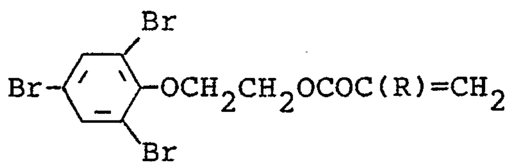

(R is H, $CH_3$, Cl, F or CN), and

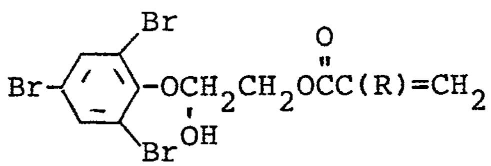

(R is H, $CH_3$, Cl, F or CN).

The polyfluoroalkyl group-not containing monoacrylate usually used as a so-called dilution monomer in the business world handling curable resins and is used for viscosity adjustment also in the insulating material of the invention, but is also important for adjustment of the dynamical strength and flexibility of the cured product obtained by curing the insulating material.

As dilution monomers of the invention, there can be mentioned, besides the above nonfluorine series monoacrylates, styrene, p-methoxystyrene, dimethylvinylmethoxysilane, dimethylvinylethoxysilane, vinyltrichlorosilane, vinyltrimethoxysilane, vinyltriethoxysilane, methylvinyldimethoxysilane, acrylic acid, methacryl acid, and silicone chain-containing vinyl compounds such as

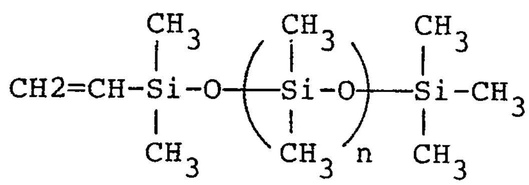

(n = 1 - 150),

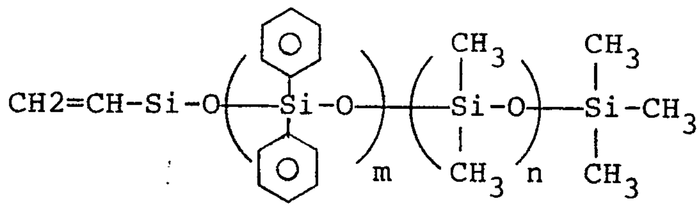

(m + n = 2 - 150),

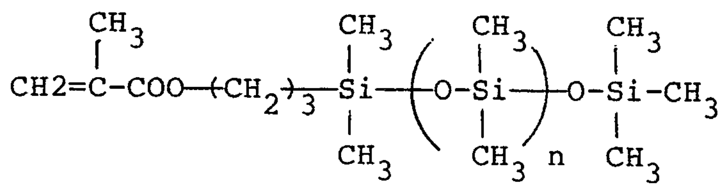

(n = 1 - 150)

and the like.

The polyfluoroalkyl group-not containing polyfunctional acrylates (IV) of the invention include so-called polyfunctional acrylates or special acrylates, and prepolymers, base resins, oligomers or acrylic oligomers, in the industry, and the following compounds are specifically exemplified:

(i) A polyhydric (meth)acrylates wherein two or more (meth)acrylates acids are linked to a polyhydric alcohol

(ii) A polyester acrylate wherein two or more (meth)acrylic acids are linked to a polyester polyol obtained by the reaction of a polyol with a polybasic acid [In the above (i) and (ii), polyhydric alcohols include ethylene glycol, 1,4-butanediol, 1,6-hexanediol, diethylene glycol, trimethylol propane, dipropylene glycol, polypropylene glycol, pentaerthritol, dipentaerythritol, etc., and polybasic acids include phthalic acid, adipic acid, maleic acid, trimellitic acid itacomic acid, succinic acid, terephthalic acid, alkenylsuccinic acid, etc.].

(iii) An epoxy-modified (meth)acrylates having (meth)acryloyl group(s) as functional group(s) obtained by esterifying the epoxy groups of an epoxy resin with (meth)acrylates acid [As epoxy resins, there can be mentioned bisphenol A-epichlorohydrin type, phenol nonolakepichlorohydrin type, polyhydric-epichlorohydrin type alicyclic resins, etc.]

(iv) A polyurethane acrylate obtained by reacting a hydroxyl group-containing (meth)acrylates with a polyvalent isocyanate compound [As a polyvalent isocyanate compound, there can, for example, be mentioned one having a structure of a polyester, a polyester, a polyurethane or the like at the center of the molecule and isocyanate groups at the both ends.]

(v) Polyester (meth)acrylates, melamine (meth)acrylate, alkyd (meth)acrylates, isocyanate (meth)-acrylates, silicone (meth)acrylates and the like.

More specific examples of these compounds include the following compounds:

IV-1: Ethylene glycol di(meth)acrylates
IV-2: Diethylene glycol di(meth)acrylates
IV-3: Triethylene glycol di(meth)acrylates
IV-4: Polyethylene glycol di(meth)acrylates (number average molecular weight 150 to 1,000)
IV-5: Propylene glycol di(meth)acrylates
IV-6: Dipropylene glycol di(meth)acrylates

IV-7: Tripropylene glycol di(meth)acrylates
IV-8: Polypropylene glycol di(meth)acrylates (number average molecular weight 200 to 1,000)
IV-9: Neopentyl glycol di(meth)acrylates
IV-10: 1,3-Butanediol di(meth)acrylates
IV-11: 1,4-Butanediol di(meth)acrylates IV-12: 1,6-Hexanediol di(meth)acrylates
IV-13: Hydroxypivalic acid ester neopentyl glycol di(meth)acrylates

IV-14:

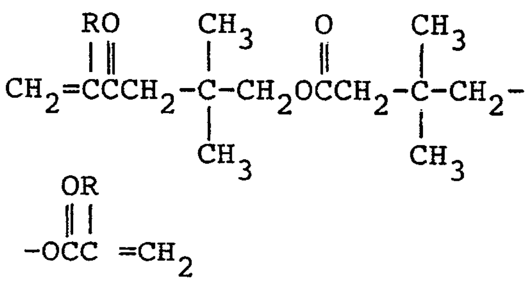

(wherein R is H or $CH_3$)

IV-15:

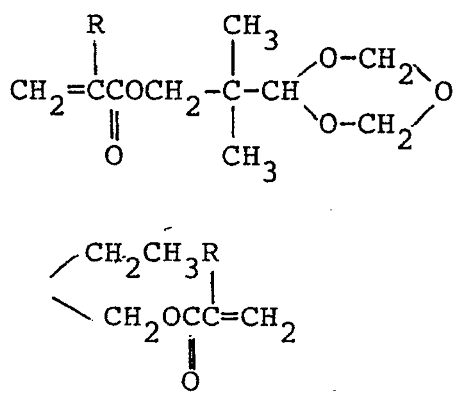

(wherein R is H or $CH_3$)
IV-16: Bisphenol A di(meth)acrylates
IV-17: Trimethylolpropane tri(meth)acrylates
IV-18: Pentaerythritol tri(meth)acrylates
IV-19: Dipentaerythritol hexa(meth)acrylates
IV-20: Pentaerythritol tetra(meth)acrylates

IV-21: Trimethylolpropane di(meth)acrylates

IV-22: Dipentaerythritol monohydroxypenta-(meth)acrylates

IV-23: Neomer-MA305 [produced by SANYO CHEMICAL INDUSTRIES, LTD.]

| | | | |
|---|---|---|---|
| IV-24: | " | BA60 | [ " ] |
| IV-25: | " | TA605 | [ " ] |
| IV-26: | " | TA401 | [ " ] |
| IV-27: | " | PHA405X | [ " ] |
| IV-28: | " | TA705 | [ " ] |
| IV-29: | " | EA400X | [ " ] |
| IV-30: | " | EE401 | [ " ] |
| IV-31: | " | EP405X | [ " ] |
| IV-32: | " | HB601X | [ " ] |
| IV-33: | " | HB605X | [ " ] |

IV-34: KAYARAD HY-220 [produced by NIPPON KAYAKU CO., LTD.]

| | | | |
|---|---|---|---|
| IV-35: | " | HX-620 | [ " ] |
| IV-36: | " | D-310 | [ " ] |
| IV-37: | " | D-320 | [ " ] |
| IV-38: | " | D-330 | [ " ] |
| IV-39: | " | DPHA | [ " ] |
| IV-40: | " | DPCA-20 | [ " ] |
| IV-41: | " | DPCA-30 | [ " ] |
| IV-42: | " | DPCA-60 | [ " ] |
| IV-43: | " | DPCA-120 | [ " ] |

IV-44: FA-713A [produced by HItachi Chemical Co., Ltd.]

IV-45:

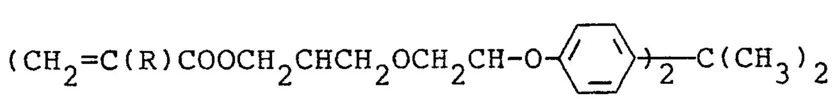

(wherein R is H or $CH_3$).

IV-46:

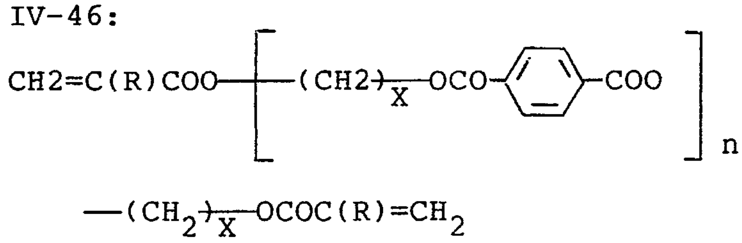

(wherein n, X are integers of 1 to 10) (wherein R is H or $CH_3$).

IV-47:

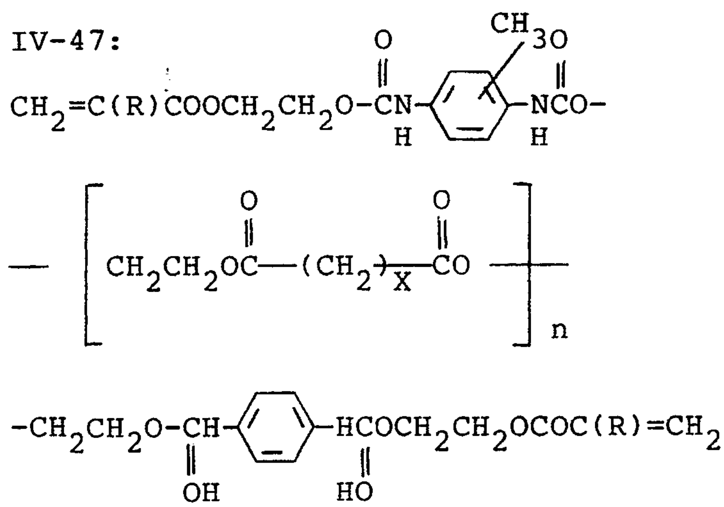

(n, X are integers of 1 to 10) (wherein R is H or $CH_3$).

IV-48: Polyethylene glycol 400 di(meth)acrylates

IV-49: 1,3-Bis(3'-acryloxyethoxy-2'-hydroxy-propyl)-5,5-dimethylhydantoin

IV-50:

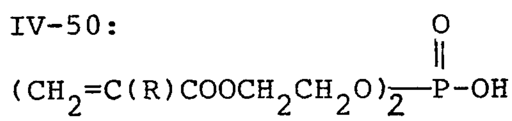

(wherein R is H or $CH_3$).

IV-51: $(CH_2{=}C(R)COOCH_2CH_2O)_3P{=}O$

(wherein R is H or $CH_3$).

IV-52:
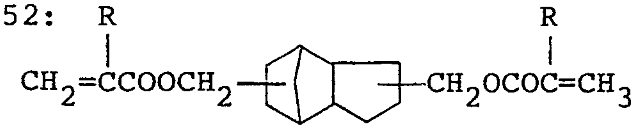
(wherein R is H or $CH_3$).

IV-53:
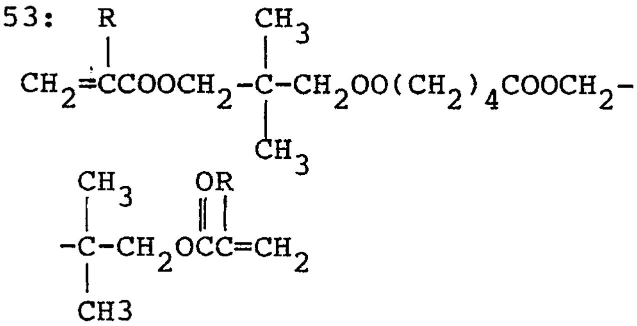

(wherein R is H or $CH_3$).

IV-54:
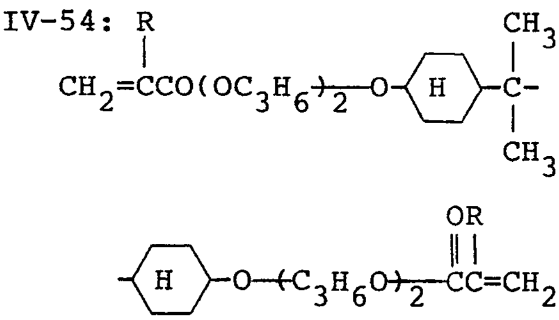
(wherein R is H or $CH_3$).

IV-55:
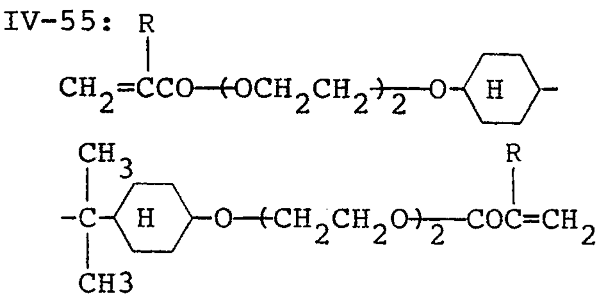

(wherein R is H or $CH_3$).

IV-56:

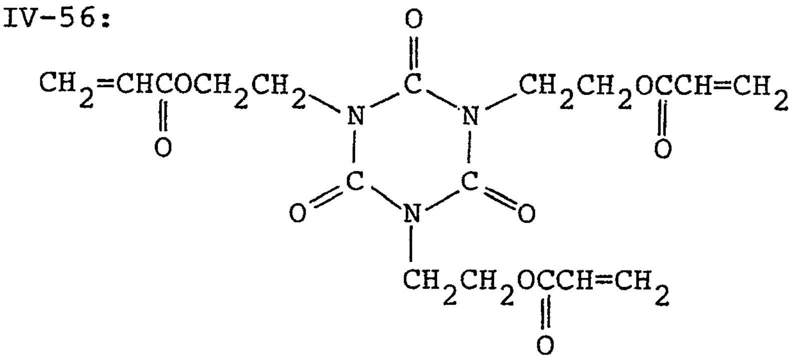

IV-57:

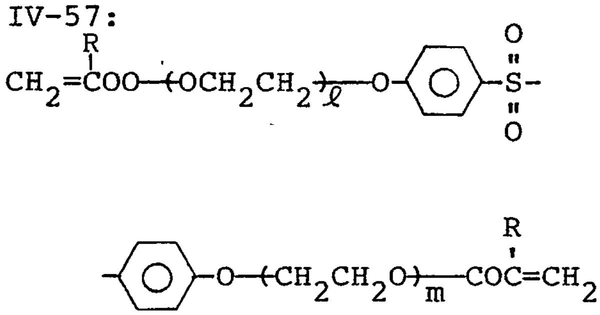

( ℓ + m = 4)

(wherein R is H or $CH_3$)

IV-58:

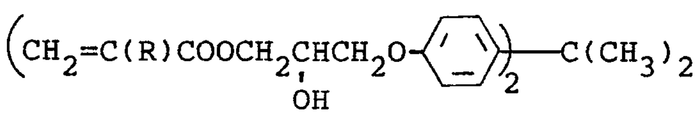

(wherein R is H or $CH_3$)

IV-59:

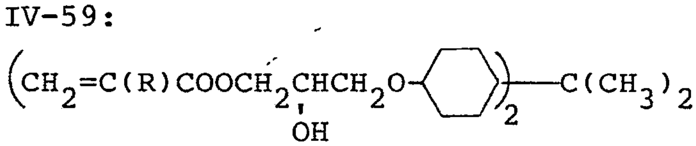

(wherein R is H or $CH_3$)

IV-60:

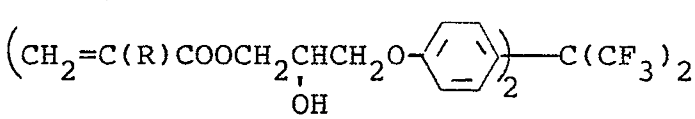

(wherein R is H or $CH_3$)

IV-61:

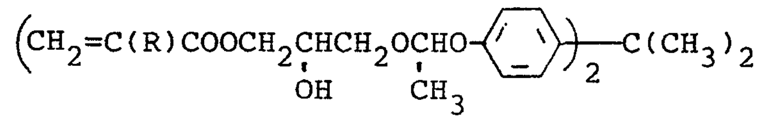

(wherein R is H or $CH_3$)

IV-62:

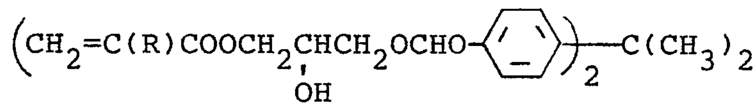

(wherein R is H or $CH_3$)

IV-63:

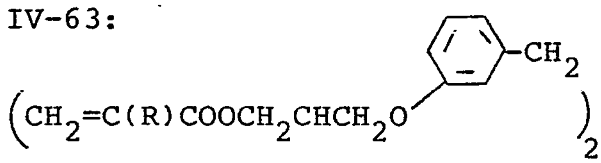

(wherein R is H or $CH_3$)

IV-64:

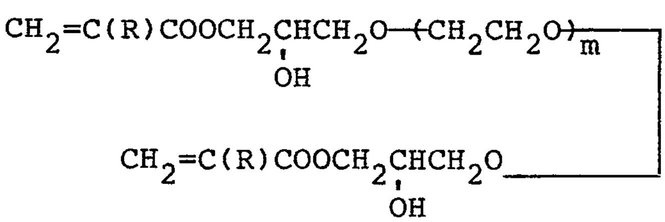

(wherein m is an integer of 1 to 10 and R is H or $CH_3$)

IV-65:

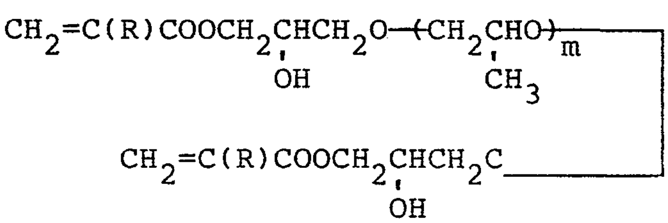

(wherein m is an integer of 1 to 10 and R is H or $CH_3$)

IV-66:

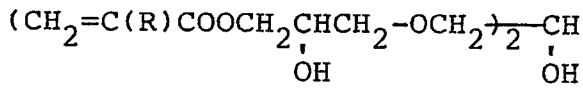

(wherein R is H or $CH_3$).

IV-67:

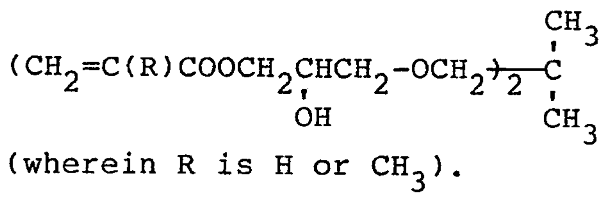

(wherein R is H or $CH_3$).

IV-68:

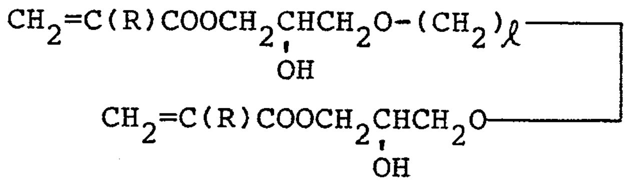

(wherein $\ell$ is an integer of 2 to 9 and R is H or $CH_3$)

IV-69:

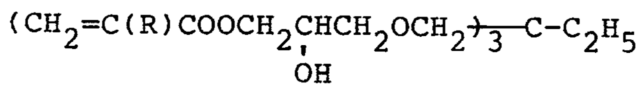

(wherein R is H or $CH_3$).

IV-70:

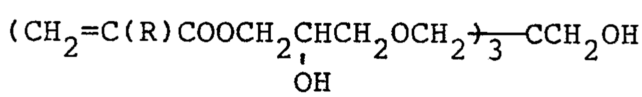

(wherein R is H or $CH_3$).

IV-71:

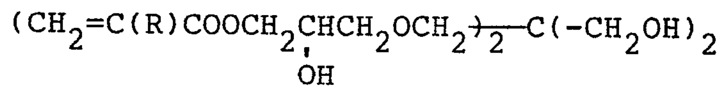

(wherein R is H or $CH_3$).

IV-72:

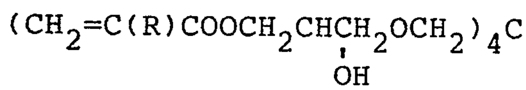

(wherein R is H or $CH_3$).

IV-73:

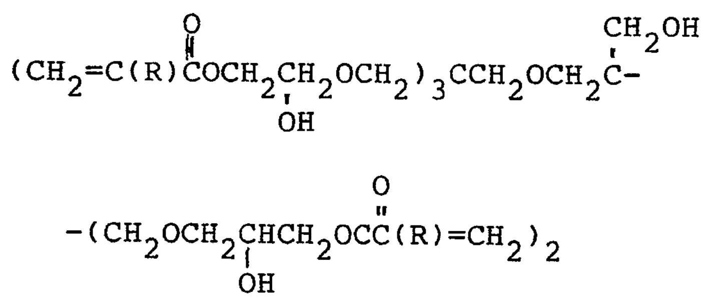

(wherein R is H or $CH_3$).

IV-74:

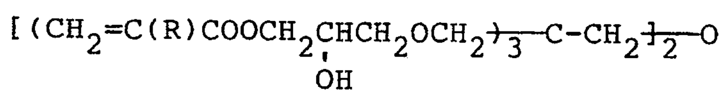

(wherein R is H or $CH_3$).

IV-75:

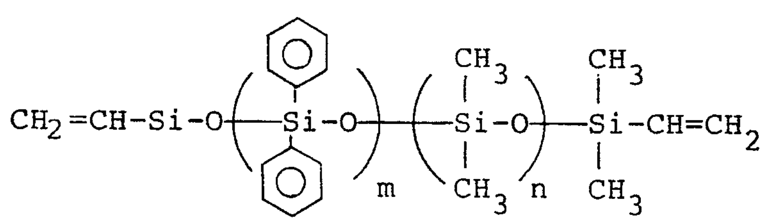

(m + n = 2 - 150),

IV-76:

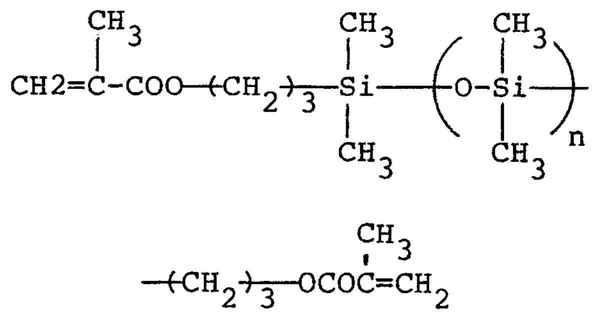

(n = 1 - 150)

IV-77:

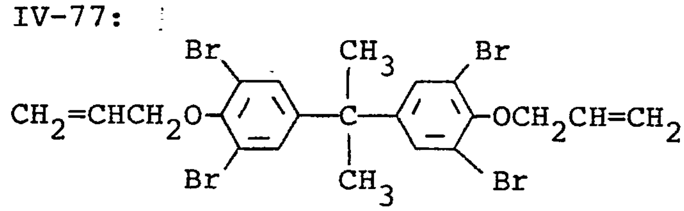

IV-78:

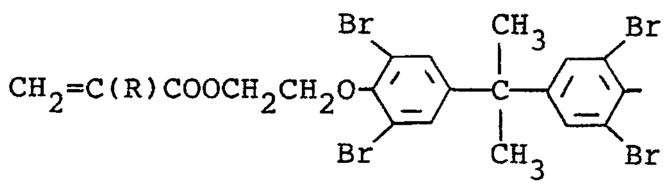

$-OCH_2CH_2OCOC(R)=CH_2$

(wherein R is H or $CH_3$).

IV-79:

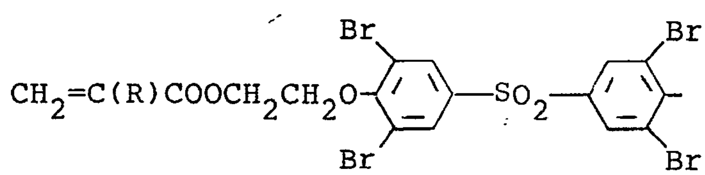

$-OCH_2CH_2OCOC(R)=CH_2$

(wherein R is H or $CH_3$).

The polyfunctional acrylate is important to give curability, flexibility, dynamical strength, etc. of the insulating material of the invention.

It is extremely important in view of insulating performance that the insulating material of the radical polymerization system of the invention contains as an indispensable component a polyfluoroalkyl group-containing ethylenically alpha,beta-unsaturated monomer.

The insulating material of the radical polymerization system of the invention is composed, for example, of a polyfluoroalkyl group-containing ethylenically mono alpha,beta-unsaturated monomer and an

ethylenically poly alpha,beta-unsaturated monomer, but it is preferred from the viewpoint of the absolute value of insulating performance that it is composed of a polyfluoroalkyl group-containing ethylenically mono alpha,beta-unsaturated monomer and a polyfluoroalkyl group-containing ethylenically poly alpha,beta-unsaturated monomer as indispensable components.

Although the composition rate of the polyfluoroalkyl group-containing monoacrylate (I-a), the polyfluoroalkyl group-containing polyfunctional acrylate (I-b), the ethylenically alpha,beta-unsaturated dicarboxylic acid or its ester (II), the polyfluoroalkyl group-not containing monoacrylate (III) and the polyfluoroalkyl group-not containing polyfunctional acrylate (IV) in the radical polymerization system insulating material of the invention can optionally be selected in accordance with dynamical properties after curing and the like, it is preferred in view of curability, flexibility of the insulation after curing, and insulating performance and the like with respect to the invention that, by weight ratio,

$$(I\text{-}a) + (I\text{-}b) + (II) : (III) + (IV) = 3 : 100 - 100 : 0$$

wherein

$$(I\text{-}a) + (I\text{-}b) : (II) = 50 : 50 - 100 : 0$$

$$(III) : (IV) = 0 : 100 - 100 : 0$$

and

$$(I\text{-}a) : (I\text{-}b) = 1 : 99 - 100 : 0,$$

and it is preferred in view of insulating performance that a fluorine-containing monoacrylate (I-a) or a polyfluoroalkyl group-containing ethylenically alpha,beta-unsaturated dicarboxylic acid or its ester is contained as a polyfluoroalkyl group-containing monofunctional monomer.

The insulating material of the invention can be polymerized and cured by giving light, election beam, radiation energy or heat to form a desired insulator. When light such as ultraviolet ray is utilized as a polymerization initiation energy, a so-called photopolymerization initiator known in the industry can be used. Examples of such photoinitiators (V) include V-1: benzophenone, V-2: acetophenone, V-3: benzoin, V-4: benzoin ethyl ether, V-5: benzoin isobutyl ether, V-6: benzyl methyl ketal, V-7: azobisisobutyronitrile, V-8: hydroxycyclohexyl phenyl ketone, V-9: 2-hydroxy-2-methyl-1-phenylpropan-1-one, etc. When a photosensitizer, for example, an amine compound or a phosphorus compound is added together therewith, the polymerization can further be accelerated. From the viewpoint of promotion of polymerization and curing and/or enhancement of the heat resistance and light resistance of the insulator after curing, it is possible to add a monofunctional or polyfunctional thiol group-containing compound. When polymerization and curing are carried out by electron beam or radiation, it is not par;ticularly necessary to add a polymerization initiator, etc.

When heat is utilized as polymerization initiation energy, polymerization and curing can be carried out by heating the insulating material, for example at 80 to 120 °C, with no catalyst or in the presence of a polymeri zation initiator such as azobisisobutyronitrile, benzoyl peroxide, methyl ethyl ketone peroxide-cobalt naphthenate or the like.

According to finding of the present inventors, in view of workability, productivity and economic efficiency in formation of the insulator and the performance of the resulting insulator, it is preferred to cure the insulating material with any one of ultraviolet ray, electron beam and radiation, compared to curing with heat. Among them, a method to carry out polymerization and curing with ultraviolet ray is most convenient and economical.

On the other hand, among insulating materials of the invention those of the cation polymerization system are each composed mainly of a polyfluoroalkyl group-containing monoepoxy monomer, and if necessary, a polyfluoroalkyl group-not containing monoepoxy monomer or a polyepoxy monomer can further be used.

As polyfluoroalkyl group-containing monoepoxy monomers (VI), there can, for example, be mentioned compounds represented by the general formula

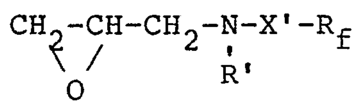

[wherein $R_f$ is as defined above, X' is $-SO_2-$, $-CO-$, $-(CH_2)_{n'}-$, (wherein n' is 1 to 10) or $-CH_2-CH(OH)-CH_2-$, and R' is H or an alkyl group having 1 to 6 carbon atoms], and compounds represented by the general formula

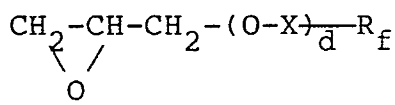

[wherein $R_f$ and X are as defined above and d is 0 or 1].

The following are further specific examples of these compounds.

VI-1: 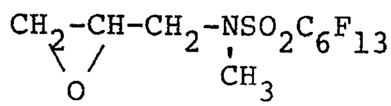

VI-2: 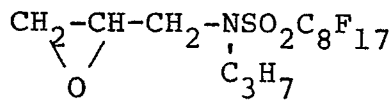

VI-3: 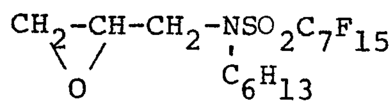

VI-4: 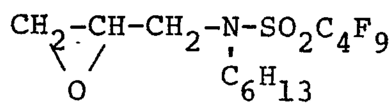

VI-5: 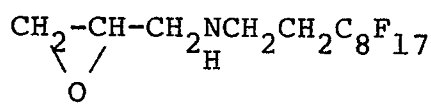

VI-6: 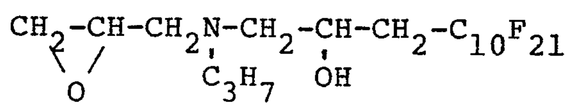

VI-7: 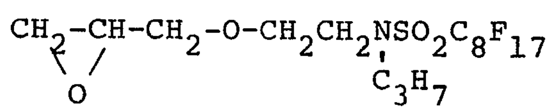

VI-8: 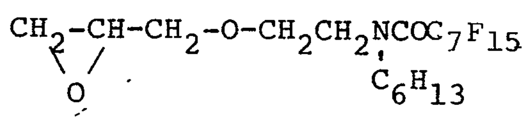

VI-9: 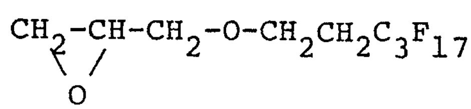

VI-10: 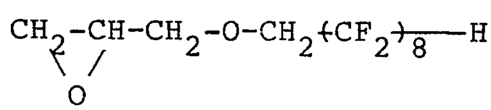

VI-11: 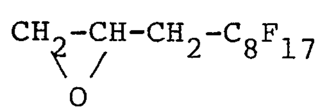

VI-12: 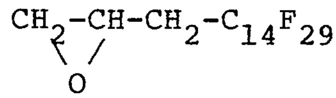

VI-13: 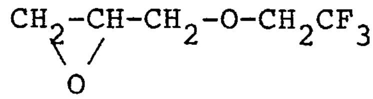

A polyepoxy monomer is mentioned as an example of a polymerizable monomer which can be used together with the above polyfluoroalkyl group-containing monoepoxy monomer (VI).

The polyepoxy monomer in the invention means a monomer having at least two polymerizable epoxy groups.

Polyepoxy monomers can roughly be classified into a polyfluoroalkyl group or polyfluoroalkylene group-containing polyepoxy monomer (VII) and a polyfluoroalkyl group or polyfluoroalkylene group-not containing polyepoxy monomer (IX).

As polyfluoroalkyl group or polylfuoroalkylene group-containing polyepoxy monomers (VII), there can be mentioend compounds wherein hydrogen atom(s) in the constitutive components excluding the glycidyl group(s) in a later-described polyfluoroalkyl or polyfluoroalkylene group-not containing polyepoxy monomer (IX) is/are substituted by fluorine atom(s), perfluoroalkyl group(s) having 1 to 20 carbon atoms or a fluorinated aliphatic groups; compounds represented by the general formula

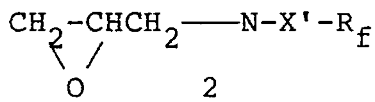

[wherein $R_f$ and X' are as defined above]; and those disclosed in US Patent Nos. 3,720,637, 3,879,430, 4,132,681, 4,284,747 and 4,356,296, etc.

The following compounds are, for example, mentioned as further specific examples thereof:

VII-1:

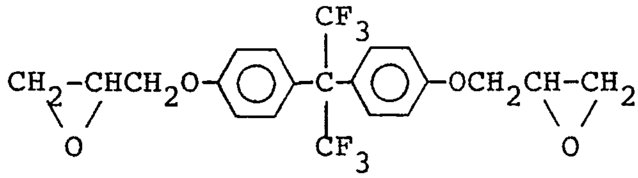

VII-2:

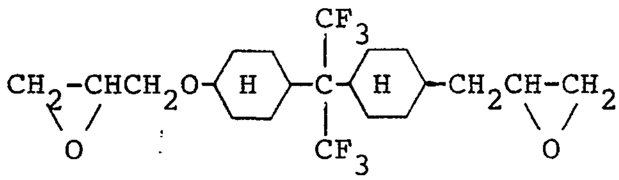

VII-3:

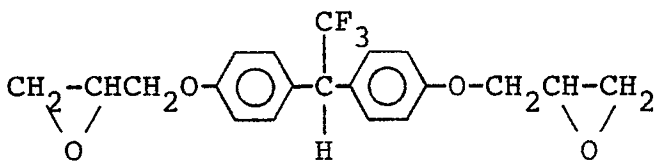

VII-4:

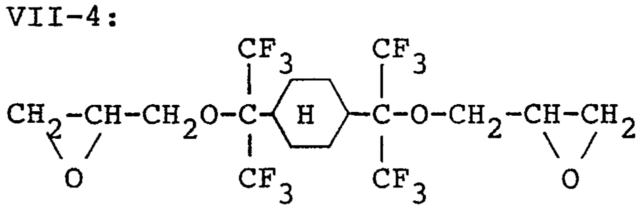

VII-5:

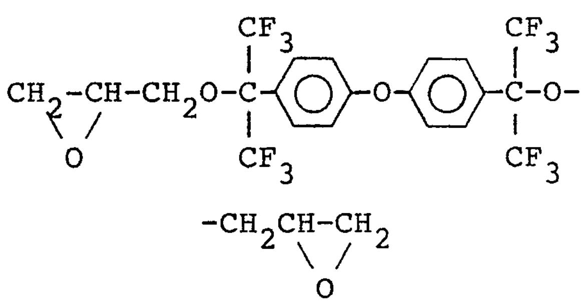

VII-6:

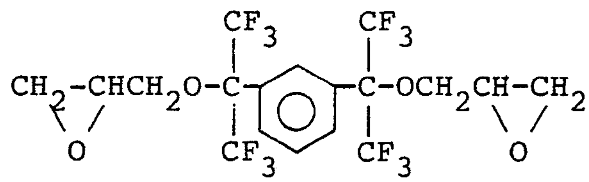

VII-7:

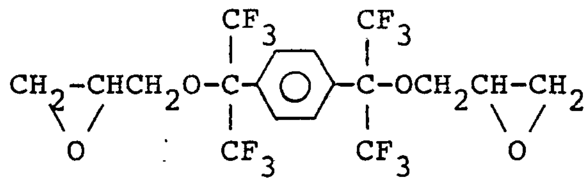

VII-8:

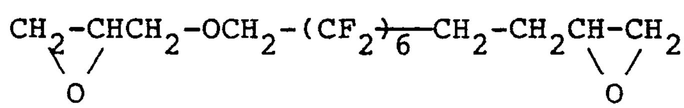

VII-9:

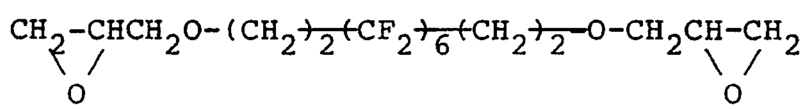

VII-10:

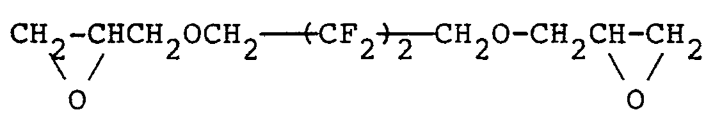

VII-11:

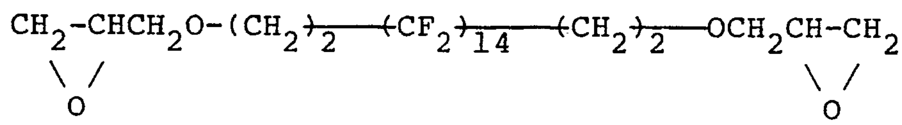

VII-12:

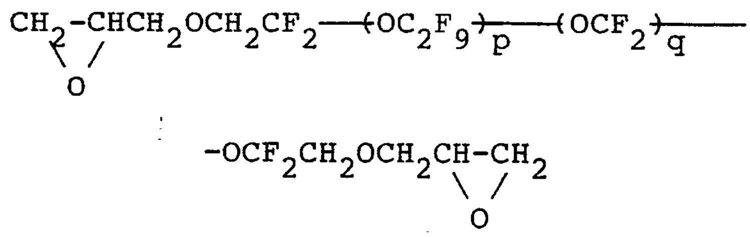

(wherein p and q are integers of 1 to 10)

VII-13:

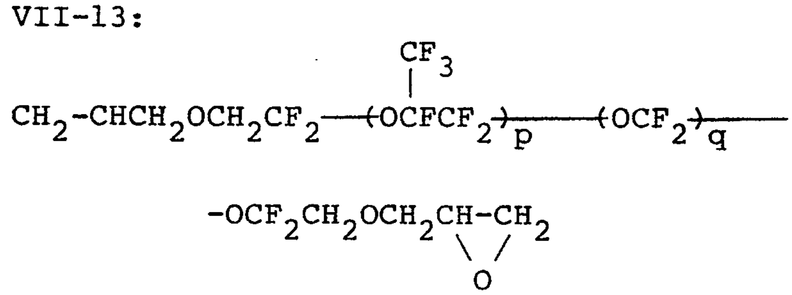

(wherein p and q are integers of 1 to 10)

VII-14:

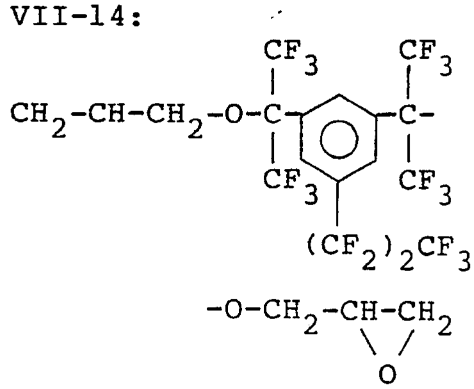

VII-15:

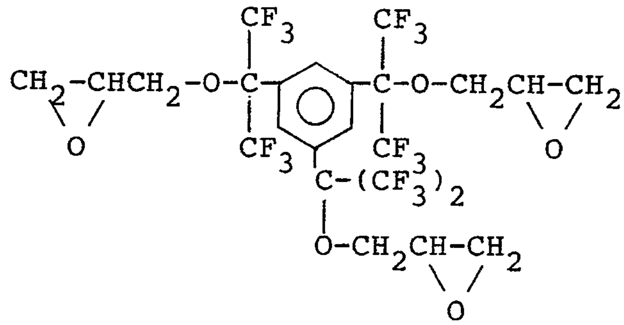

VII-16:

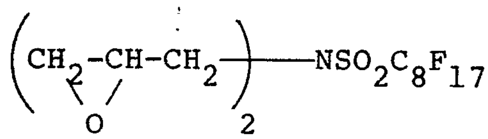

VII-17:

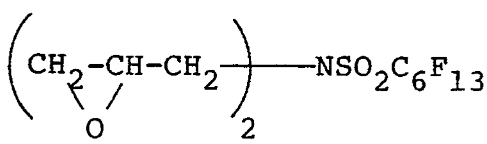

VII-18:

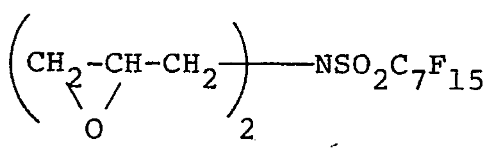

VII-19:

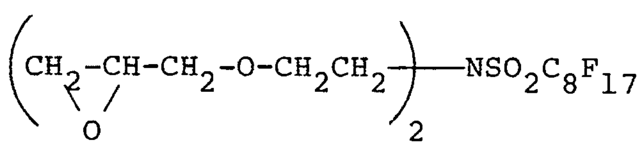

VII-20:

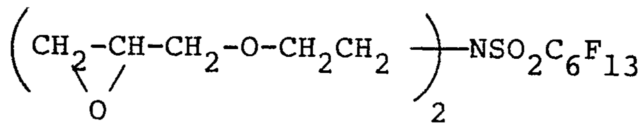

VII-21:

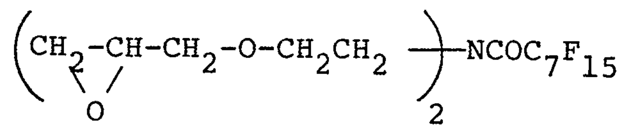

It is a matter of course that the invention is not limited at all by the above specific examples.

Besides the above respective epoxy monomer groups, a polyfluoroalkyl group or polyfluoroalkylene group-not containing monoepoxy monomer (VIII), and a polyfluoroalkyl group or polyfluoroalkylene-not containing polyepoxy monomer (IX) are preferably used as cationic polymerizable components of the insulating material of the invention.

Polyfluoroalkyl group-not containing monoepoxy monomers (VIII) mean a glycidyl-etherified monohydroxy compound and a glycidyl-esterified monocarboxylic acid compound, and examples of them include olefin oxides, octylene oxide, butyl glycidyl ether, glycidyl methacrylate, allyl glycidyl ether, styrene oxide, phenyl glycidyl ether, n-butylphenol glycidyl ether, 3-pentadecylphenyl glycidyl ether, cyclohexenevinyl monoxide, alpha-pinene oxide, glycidyl esters of tert-carboxylic acid, silicone chain-containing epoxy compounds represented by the general formula

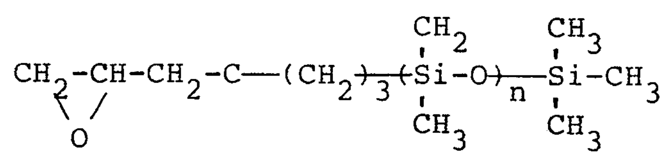

(wherein n is an integer of 1 to 150), and monoepoxy monomers containing bromine in the molecule such as

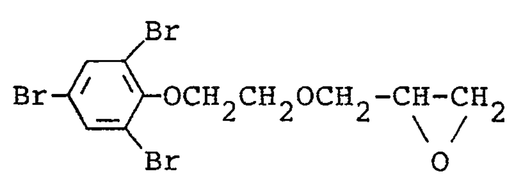

and

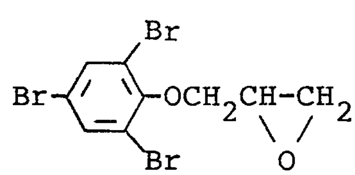

Further, the following compounds can be mentioned as examples of the polyfluoroalkyl group or polyfluoroalkylene group-not containing polyepoxy monomer (IX). Namely, as bisphenol A type epoxy resins, there can be mentioned those represented by the general formula

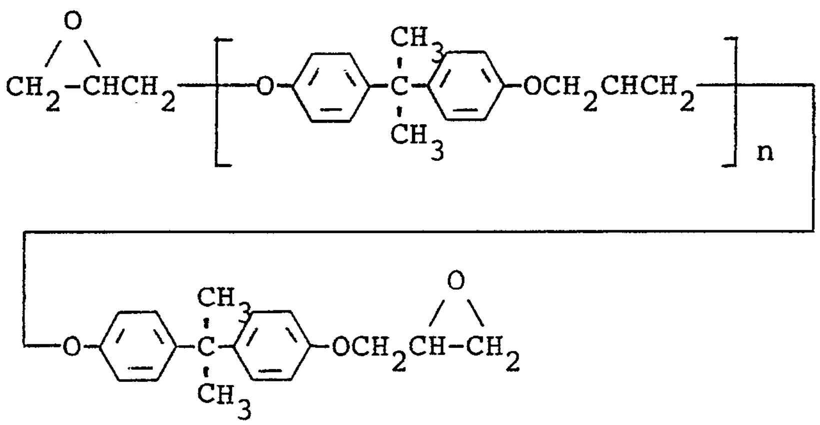

[wherein n is an integer of 0 to 20], more specifically Epichlone 800 (produced by DAINIPPON INK AND CHEMICALS, INC.), Epicoat 828, 834, 871, 1001 and 1004 (produced by Shell Chemical Co.), DER 331-J, 337-J, 661-J, 664-J and 667-J (produced by The Dow Chemical Co.), etc. As novolak type epoxy resins, there can be mentioned those represented by the general formula

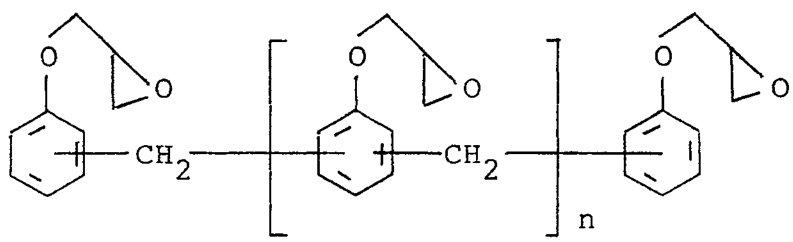

(wherein n is an integer of 0 to 20), more specifically Epicoat 152, 154 and 172 (produced by Shell Chemical Co.), Araldite EPN 1138 (produced by Ciba-Geigy AG), DER 431, 438 and 439 (produced by The Dow Chemical Co.), etc. As alicyclic epoxy resins, there can, for example, be mentioned

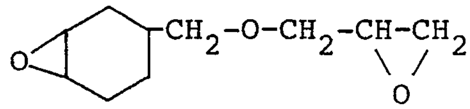

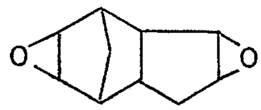

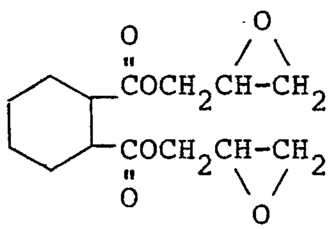

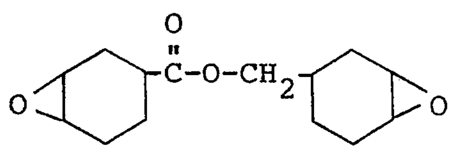

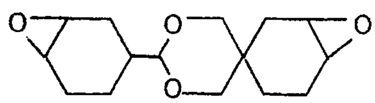

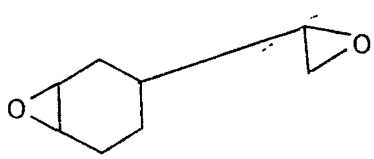

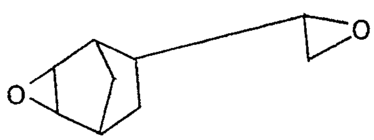

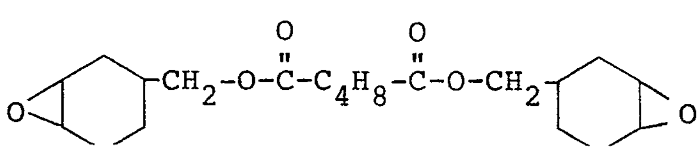

As commercially available commodities, there can be mentioned Araldite CY-175, -176, -179, -182, -184 and -192 (produced by Ciba-Geigy AG), Chissonocks 090, 091, 092, 301 and 313 (produced by CHISSO CORPORATION), CYRACURE 6100, 6110 and 6200 and ERL 4090, 4617, 2256 and 5411 (produced by Union Carbide Corporation), etc. As polyvalent glycidyl ethers derived from aromatic polyhydric alcohols, there can, for example, be mentioned a diglycidyl ether of an adduct of 1 to 16 moles of an alkylene oxide to bisphenol A, a diglycidyl ether of an adduct of 1 to 16 moles of an alkylene oxide to bisphenol F, a diglycidyl ether of an adduct of 1 to 16 moles of an alkylene oxide to bisphenol S, etc. As examples of a polyvalent glycidyl ether of an aliphatic polyhydric alcohol, there can be mentioned ethylene glycol diglycidyl ether, polyethylene glycol diglycidyl ether, propylene glycol diglycidyl ether, polypropylene glycol diglycidyl ether, neopentyl glycol diglycidyl ether, 1,6-hexanediol diglycidyl ether, glycerol diglycidyl ether, trimethylolpropane triglycidyl ether, diglycidyl ether of hydrogenated bisphenol A, 2,2-dibromoneopentyl

glycol diglycidyl ether, etc. Further, there can be exemplified heterocyclic glycidylamino resins, resins derived from triglycidyl-p-aminophenol, triazine-based resins, hydantoinepoxy resins, silicone chain-containing diepoxy monomers represented by the general formula

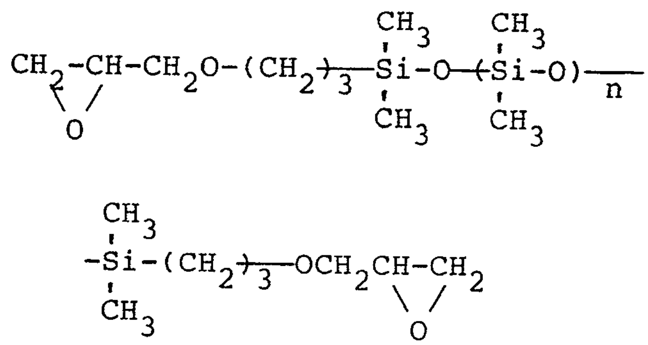

(n = 0 - 150),

bromide-containing diepoxy monomers such as

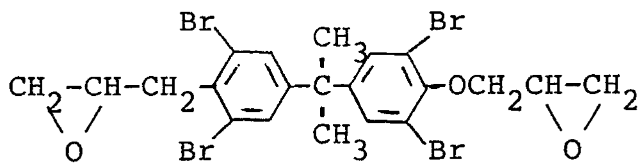

and

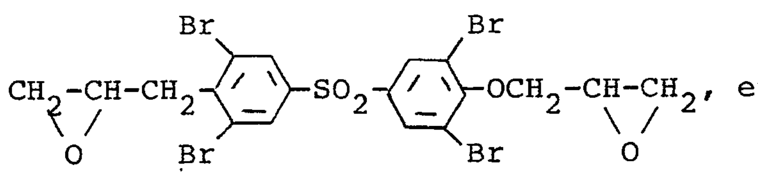

, etc.

It is a matter of course that the invention is not limited at all by these specific examples.

It is extremely important in view of insulating performance that the cationic polymerization system insulating material of the invention contains as an indispensable component a polyfluoroalkyl group-containing monoepoxy monomer.

The cationic polymerization system insulating material of the invention is composed, for example, of a polyfluoroalkyl group-containing monoepoxy monomer and a polyepoxy monomer, but it is the composition rate by weight of the polyfluoroalkyl group-containing monoepoxy monomer (VI), the polyfluoroalkyl group or polyfluoroalkylene group-containing polyepoxy monomer (VII), the polyfluoroalkyl group or polyfluoroalkylene-not containing monoepoxy monomer (VIII), and the polyfluoroalkyl group or polyfluoroalkylene group-not containing polyepoxy monomer (IX) is

(VIII) + (VI) : (IX) + (VII) = 0:100 to 97:3

wherein

(VIII) + (IX) : (VI) + (VII) = 0:100 to 97:3,

(VIII) : (IX) = 0:100 to 100:0

(VI) : (VII) = 1:99 to 100:0.

The cationic polymerization system insulating material of the invention can cure at room temperature or with heating in the presence of a curing agent such as boron trifluoride monoethylamine, boron trifluoride benzylamine, a fluoroborate salt, a dibasic acid hydrazide (e.g. adipic acid dihydrazide), an alkylborane (e.g. triethylaminoborane), phenylenediamine-zinc bromide complex, dicyandiamide, p,p'-diaminodiphenylmethane, p,p'-diaminodiphenylsulfonic acid or 2-ethyl-4-methyl-imidazole to form the desired insulator. However, according to the finding of the present inventors, a method to polymerize and cure the insulating material in the presence of a photopolymerization initiator so called in the industry using light such as ultraviolet ray is preferred from the aspects of productivity, economical efficiency, etc., compared to a method to use heat for curing.

As preferred photopolymerization initiators, there can, for example, be mentioned an aromatic onium salt compound disclosed in Japanese Patent Publication No. 14278/1977 which contains an element belonging to the VIa group of the periodic table and has photosensitivity, and an aromatic onium salt compound disclosed in Japanese Patent Publication No. 14279/1977 which contains an element belonging to the Va group.

The aromatic onium salt compound containing an element belonging to the VIa group or the Va group is represented by the general formula

$[(R_9)_a(R_{10})_b(R_{11})_cD]_d[MQ_e]^{-(e-f)}(X)$

[wherein $R_9$ represents a monovalent organic aromatic group, $R_{10}$ represents a monovalent organic aliphatic group selected from an alkyl group, a dicycloalkyl group and a substituted alkyl group, $R_{11}$ represents a polyvalent organic group constituting a heterocyclic ring or condensed ring structure selected from an aliphatic group and an aromatic group, D represents an element belonging to the VIa group selected from sulfur, selenium and tellurium or an element belonging to the Va group select ed from nitrogen, phosphorus, arsenic, antimony and bismuth, M represents a metal or semimetal, Q represents a halogen group, a represents an integer of 0 to 3 when D is an element belonging to the VIa group or an integer of 0 to 4 when D is an element belonging to the Va group, b represents an integer of 0 to 2, c represents an integer of 0 or 1 when D is an element belonging to the VIa group or an integer of 0 to 2 when D is an element belonging to the Va group, f is the valence of M and represents an integer of 2 to 7, and e is larger than f and represents an integer of 8 or less, and further the total of a, b and c is 3 (the valence of X) when D is an element belonging to the VIa group or 4 (the valence of X) when D is an element belonging to the Va group, and d = e - f]. When the onium salt is irradiated with light, the corresponding Lewis acid is released which has a characteristic to initiate polymerization of the epoxy resin. The following compounds are mentioned as specific examples thereof:

X-1:

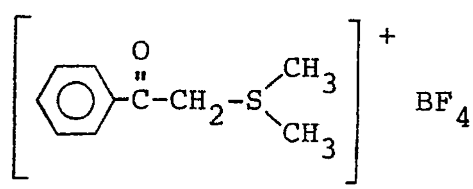

X-2:

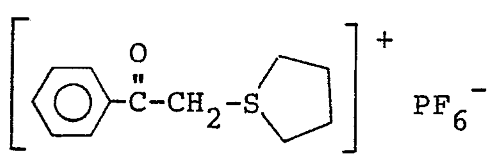

X-3:

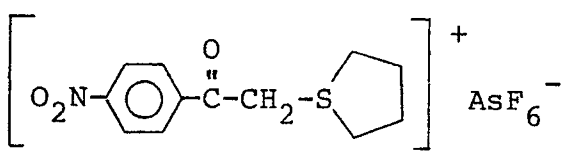

X-4:

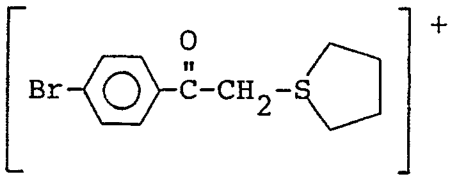

$SbF_6^-$

X-5:

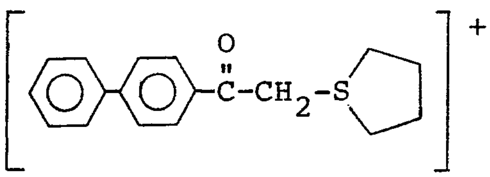

$FeCl_4^-$

X-6:

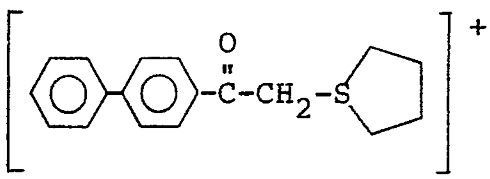

$SnCl_4^-$

X-7:

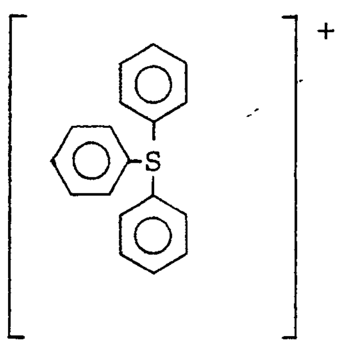

$SbCl_6^-$

X-8:

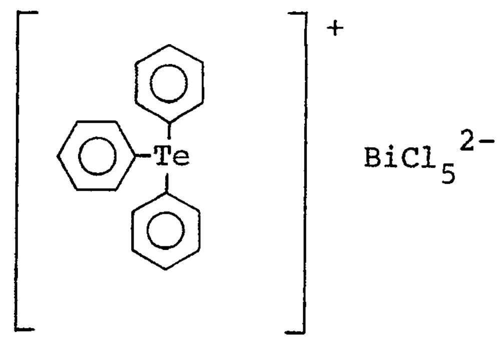

X-9:

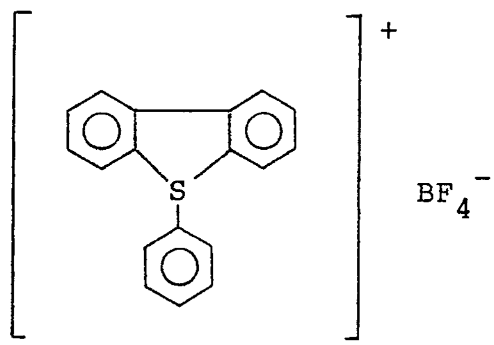

X-10:

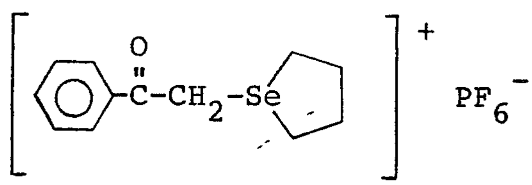

X-11:

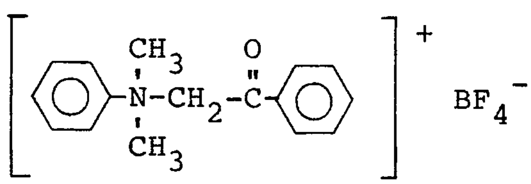

X-12:

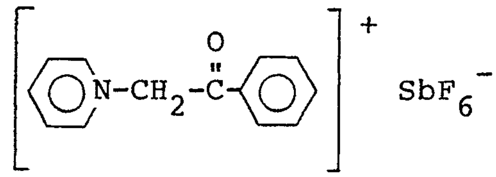

X-13:

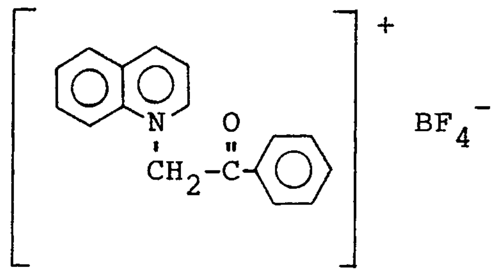

X-14:

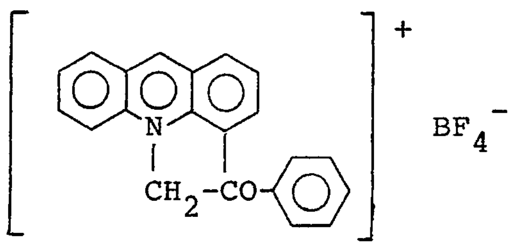

X-15:

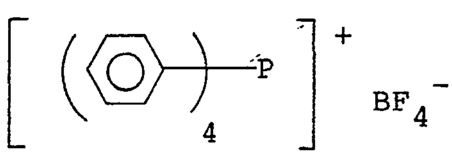

X-16:

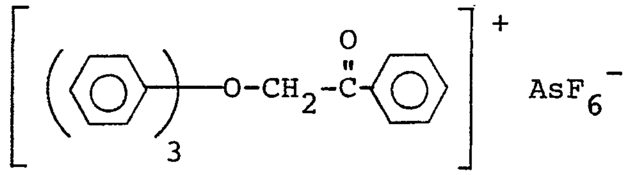

X-17:

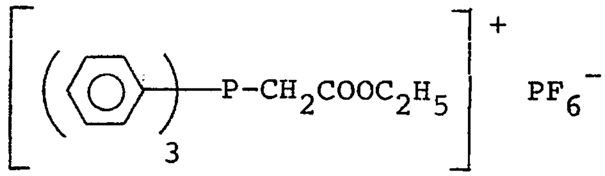

X-18:

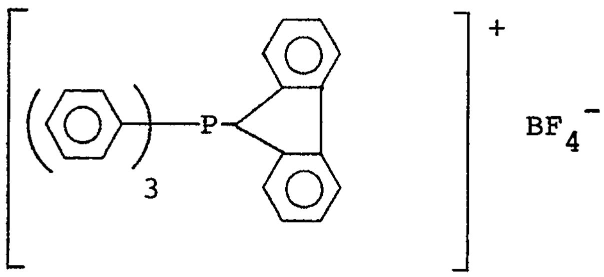

X-19:

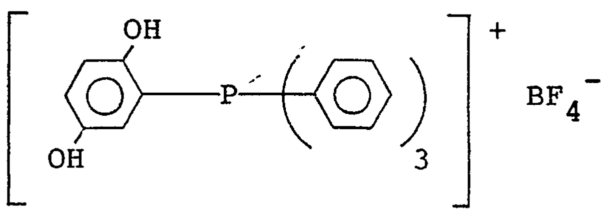

X-20:

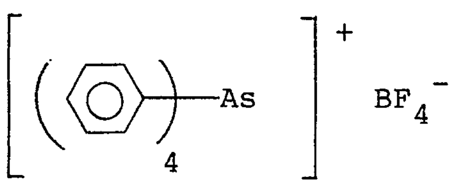

X-21:

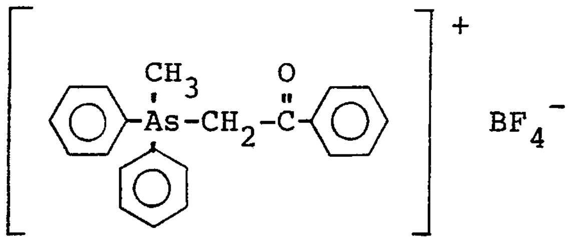

X-22:

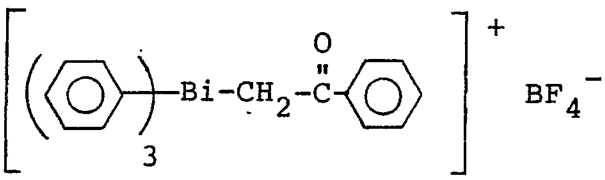

Besides the above compounds, compounds which forms a Lewis acid by light, for example, aryldiazonium compounds disclosed in Japanese Patent Publication No. 8153/s1988, diarylidonium salt compounds disclosed in J. V. Crivello and J. H. W. Lam, Macromolecules, 10 (6), 1307-1315 (1977) and iron-allene complex type compounds such as

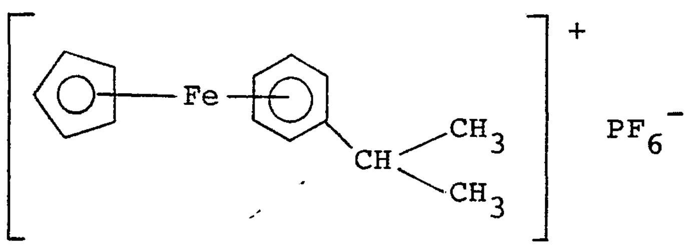

can also preferably be used as photopolymerization initiators of the epoxy resin of the invention.

The rate of the photopolymerization initiator in the insulating material of the invention is, irrespective of the radical polymerization system or the cationic polymerization system, 0.01 to 20 parts by weight, more preferably 0.1 to 10 parts by weight per 100 parts by weight of the insulating material. When the use rate of the photpolymerization initiator is within the above range, the curing rate becomes sufficiently fast and thereby the productivity of the insulator becomes better, and it becomes hard that the photopolymerization initiator has a bad influence on the dynamical strength thereof, as is the case when more than the necessitated amount of the photopolymerization initiator was used.

It is possible to further incorporate in the insulating material of the invention a coupling agent, an antifoaming agent, a leveling agent, a coloring agent, a surfactant, a plasticizer, a surface-improving agent, a viscosity-adjusting agent and the like from the viewpoint of making effective and stabilizing the adhesion of teh insulating material of the invention to the substrate and workability in application thereof onto the insulating substrate; an antioxidant, a flame retardant and the like from the viewpoint of enhancement of heat resistance; a heat resistant stabilizer and the like from the viewpoint of enhancement of light resistance; respectively according to necessity.

As viscosity-adusting agents, high molecular compounds are preferred. Among them, synthetic resins are particularly preferred, and, for example, synthetic resins such as acrylic resins, epoxy resins, silicone resins and fluororesins, can be mentioned, and any of them can be used so long as it satisfies the above condition. It goes without saying that any of thermoplastic resins, thermosetting resins and active energy ray-curable resins can be used as the synthetic resins.

As specific examples of the synthetic resins, those obtained via a radical polymerization mechanism or a cationic polymerization mechanism are mentioned. An example of the former is a polymer of an ethylenically alpha,beta-unsaturated monomer, and an example of the latter is a polymer of an epoxy

monomer. These can further be exemplified high molecular compounds containing fluorine atoms in the main chin such as vinyl group-containing fluorinated polysiloxanes (EP 208239), hydrogen atom-containing fluorinated silicones (EP 208239), fluoroalkyl methacrylate/orthomethylphenylmaleinimide copolymers (Japanese Laid-Open Patent Publication No. 235817/1985), chlorotrifluoroethylene/2,2,3,3-tetrafluoropropyl vinyl ether/hydroxyl group-containing vinyl ether copolymers (EP 121934), fluorinated polyimide [Journal of Photopolymer Science and Technology, 1 (1), 120-121 (1988)], silicone coating materials [Toshiba Review, 38 (2), 171-174 (1983)], poly(tetrafluoroethylene), poly(vinylidene fluoride), poly(vinylidene fluoride/tetrafluoroethylene), poly(tetrafluoroethylene/hexafluoropropylene), poly-(tetrafluoroethylene/propylene), poly(ethylene/tetrafluoroethylene), poly(vinylidene fluoride/hexafluoropropylene), poly(monofluoroethylene), poly(triflucroethylene), poly(fluorinated vinyl ether), poly(tetrafluoroethylene/fluorinated vinyl ether), poly(perfluorostyrene), Saitop® (produced by Asahi Glass CO., Ltd.) and Teflon® AF (produce by E. I. du Pont); polymers of fluorinated epoxy compounds having a repeating unit represented, for example, by the general formula

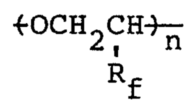

(wherein $R_f$ is a fluorinated alkyl group having 1 to 20 carbon atoms); and polymers having a repeating unit represented by the general formula

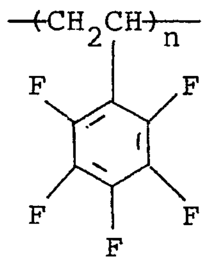

Fluorine-containing polymers (XI) are particularly preferred as the synthetic resin. There can be mentioned as fluorine-containing polymers (XI) those obtained by a radical polymerization mechanism or a cationic polymerization mechanism. An example of the former includes a polymer obtained from a polyfluoroalkyl group-containing ethylenically alpha,beta-unsaturated monomer as an indispensable component, and an example of the latter includes a polymer obtained from a polyfluoroalkyl group-containing epoxy monomer as an indispensable component.

According to a finding of the present inventors, a polymer (XI-A) of a polyfluoroalkyl group-containing ethylenically alpha,beta-unsaturated monocarboxylic acid or ester compound thereof and/or a polyfluoroalkyl group-containing ethylenically alpha,beta-unsaturated dicarboxylic acid or ester compound thereof is preferred as the synthetic resin in view of its compatibility with the above polyfluoroalkyl group-containing ethylenically mono alpha,beta-unsaturated monomer, above all, the fluorine-containing acrylate (I).

As the polyfluoroalkyl group-containing ethylenically alpha,beta-unsaturated monocarboxylic acid or ester compound thereof, there can, for example, be mentioned the above fluorine-containing monoacrylate (I-A).

As the fluorine-containing ethylenically alpha,beta-unsaturated dicarboxylic acid or ester compound thereof, there can, for example, be mentioned those having polyfluoroalkyl group(s) among the above ethylenically alpha,beta-unsaturated dicarboxylic acid esters (II).

It is a matter of course that the invention is not limited at all by the above specific examples.

According to a finding of the present inventors, the fluorine-containing monoacrylate (I-a) is particularly preferred as a monomer constituting the fluorine-containing polymer (XI-A) of the invention in view of its compatibility with the fluorine-ccntaining acrylate (I), availability of its raw materials and economic efficiency. Of course, there is no hindrance if a fluorine-containing monoacrylate (I-a) is used together with a polyfluoroalkyl group-cntaining ethylenically alpha,beta-unsaturated dicarboxylic acid or ester compound thereof.

As a monomer constituting the fluorine-containing polymer (XI-A) of the invention, there can be

introduced into the molecule, besides the fluorine-containing monoacrylate (I-a) and the polyfluoroalkyl group-containing ethylenically alpha,beta-unsaturated dicarboxylic acid or ester compound thereof, a polyfluoroalkyl group-not containign ethylenically mono alpha,beta-unsaturated monomer, for the purposes of enhancing the compatibility of the fluorine-containing polymer (XI-A) with the fluorine-containing acrylate (I) and adjusting the mechanical strength and flexibility of the insulator obtained by curing of the insulating material.

As polyfluoroalkyl group-not containing mono alpha,beta-unsaturated monomers, there can be mentioned, besides acrylic acid and methacrylate acid, polyfluoroalkyl group-not containing monoacrylates, and polyfluoroalkyl group-not containing ethylenically alpha,beta-unsaturated dicarboxylic acid and ester compounds thereof.

There can be mentioned, as polyfluoroalkyl group-not containing monoacrylates, those mentioned as examples of the monoacrylates (III), and, as polyfluoroalkyl group-not containing ethylenically alpha,beta-unsaturated dicarboxylic acids or ester compounds thereof, compounds represented by the general formula
$HOOC(R_{12})C=C(R_{13})COOH$
[wherein $R_{12}$ and $R_{13}$ are H, Cl, CN or $CH_3$ and $R_{12}$ and $R_{13}$ may be the same or different] and compounds containing no polyfluoroalkyl group among the above ethylenically alpha,beta-unsaturated dicarboxylic acids or esters thereof (II).

It is possible to use the aforementioned dilution monomers as polyfluoroalkyl group-not containing ethylenically mono alpha,beta-unsaturated monomers other than polyfluoroalkyl group-not containing monoacrylates, and polyfluoroalkyl group-not containing ethylenically alpha,beta-unsaturated dicarboxylic acids and ester compounds thereof.

It is a matter of course that the invention is not limited at all by the above specific examples.

Also preferably used as the fluorine-containing polymer (XI) of the invention is a polymerizable ethylenically alpha,beta-unsaturated group-containing fluorine resin obtained by introducing, directly or via a linkage group, into the functional group(s) existing at the side chains and/or the end(s) of the above fluorine-containing polymer (XI-A) an ethylenically alpha,beta-unsaturated monomer containing with the functional group(s).

As copolymerizable monomers capable of providing functional group(s) to the side chains in fluorine-containing polymers (XI-A), there can be mentioned, among the above-mentioned various alpha,beta-unsaturated monomers, epoxy group-containing monomers, hydroxyl group-containing monomers, carboxyl group-containing monomers, isocyanate group-containing monomers, etc. Further, the functional group(s) at the end(s) of the fluorine-containing polymer (XI-A) can usually be introduced by carrying out the radical polymerization reaction in the coexistence of a mercapto group-containing alcohol or mercapto group-containing carboxylic acid called a chain transfer agent.

As ethylenically alpha,beta-unsaturated monomers containing a functional group capable of reacting with the functional group(s) existing at the side chains and/or the end(s) of the fluorine-containing polymer (XI-A), there can be mentioned epoxy group-containing monomers, hydroxyl group-containing monomers, carboxyl group-containing monomers, isocyanate group-containing monomers, etc.

Polymerizable ethylenically alpha,beta-unsaturated group-containing fluororesins (XI-B) of the invention can be synthesized, for example, by the following processes:

1) When the functional group(s) at the side chains and/or end(s) of the fluorine-containing polymer (XI-A) is/are epoxy group(s) and/or hydroxyl group(s), a process which comprises reacting the functional group(s) with a carboxyl group-containing ethylenically alpha,beta-unsaturated monomer to introduced the corresponding ethylenically alpha,beta-unsaturated group.

2) When the functional group(s) at the side chains and/or end(s) of the fluorine-containing polymer (XI-A) is/are carboxyl group(s), a process which comprises esterifying the functional group(s) with an epoxy group-containing ethylenically alpha,beta-unsaturated monomer and/or a hydroxyl group-containing ethylenically alpha,beta-unsaturated monomer to introduce the corresponding ethylenically alpha,beta-unsaturated group.

3) When the functional group(s) at the side chains and/or end(s) of the fluorine-containing polymer (XI-A) is/are hydroxyl group(s), either a process which comprises subjecting the functional group(s) and a hydroxyl group-containing ethylenically alpha,beta-unsaturated monomer, via a polyisocyanate compound, to an urethane addition reaction to introduce the corresponding ethylenically alpha,beta-unsaturated group, or a process which comprises subjecting the functional group(s) and an isocyanate group-containing ethylenically alpha,beta-unsaturated monomer to an urethane addition reaction to introduce the corresponding ethylenically alpha,beta-unsaturated group.

4) When the functional group(s) at the side chains and/or end(s) of the fluorine-containing polymer (XI-A) is/are isocyanato group(s), a process which comprises subjecting the functional group(s) and a hydryxyl

group-containing ethylenically alpha,beta-unsaturated monomer to an urethane addition reaction to introduce the corresponding ethylenically alpha,beta-unsaturated group.

Examples of carboxyl group-containing ethylenically alpha,beta-unsaturated monomers include acrylic acid, methacrylic acid, 2-acryloyloxyethylsuccinic acid, 2-methacryloyloxyethylsuccinic acid, 2-acryloyloxyethylmaleic acid, 2-methacryloyloxyethylmaleic acid, 2-acryloyloxyethylphthalic acid, 2-methacryloyloxyethylphthalic acid, 2-acryloyloxyethylhexahydrophthalic acid, 2-methacryloyloxyethylhexahydrophthalic acid, beta-carboxyethyl acrylate, beta-carboxylethyl methacrylate, etc. Examples of epoxy group-containing ethylenically alpha,beta-unsaturated monomers include glycidyl acrylate, glycidyl methacrylate, metaglycidyl acrylate, metaglycidyl methacrylate, etc. Examples of hydroxyl group-containing vinyl monomers include monoester compounds of a dialcohol compound with acrylic acid or methacrylic acid such as hydroxyethyl acrylate, hydroxyethyl methacrylate, hydroxybutyl acrylate and hydroxybutyl methacrylate; caprolactam-modified acrylate or methacrylate; etc. Examples of isocyanato group-containing vinyl monomers include 2-isocyanatoethyl acrylate or methacrylate, an urethane bond-containing compound synthesized from a hydroxyl group-containing vinyl monomer and a polyisocyanate compound, etc. Examples of polyisocyanate compounds, namely compounds having two or more isocyanato groups in the molecule include tolylene diisocyante, 4,4'-diphenylmethane diisocyanate, xylene diisocyanate, hexamethylene diisocyanate, lysine diisocyanate, 4,4'-methylenebis(cyclohexyl isocyanate), methylcyclohexane-2,4-diisocyanate, methylcyclohexane-2,6-diisocyanate, l,3-(isocyanatomethyl)cyclohexane, isophorone diisocyanate, trimethylhexamethylene diisocyanate, dianisidine diisocyanate, phenylene diisocyanate, halogenated phenylene diisocyanate, methylene diisocyanate, butylene diisocyanate, propylene diisocyanate, octadecylene diisocyanate, 1,5-naphthalene diisocyanate, triphenylmethane triisocyanate, naphthylene diisocyanate, etc. Preferred among these polyisocyanates are tolylene diisocyanate, isophorone diisocyanate and lysine diisocyanate.

More detailed specific examples and synthetic process of polymerizable unsaturated bond group-containing fluororesins of the invention are described, for example, in GB 2,199,332.

The fluorine-containing polymer (XI) to be used, according to necessity, in the curable insulating material of the invention is important, because, in case where an electric wire conductor is coated at a high speed with the material, the polymer (XI) helps the material to display enough leveling property, viscosity and coating suitability for the material to be applied onto the substrate without generating coat deficiencies such as pinholes, and it is preferred that the polymer (XI) has a suitable viscosity. Above all, the polymer (XI) is particularly important when the material is applied, as a covering material for a thin coat insulating electric wire, onto an electric wire conductor to cover it at a high speed, in a good productivity and economical efficiency and without deficiencies such as pinholes.

Although the fluorine content of the fluorine-containing polymer (XI) of invention is not particularly limited, it is preferred in view of its compatibility with the fluorine-containing acrylate (I) that the content is 0.2 % by weight or more, particularly 1.0 % by weight or more. Further, since when the fluorine-con taining polymer (XI) contains the above fluorine-containing monoacrylate (I-a) as its constitutive unit, the compatibility of the polymer (XI) with the fluorine-containing acrylate (I) is enhanced and further, the leveling property and adhesion with the substrate are enhanced, the fluorine-containing monoacrylate (I-a) is preferred as a fluoromonomer constituting the fluorine-containing polymer (XI).

Although the composition rate of the fluorine-containing polymer (XI), the total (I) of the fluorine-containing mono acrylate and the fluorine-containing polyfunctional acrylate, the polyfluoroalkyl group-not containing monoacrylate (III), and the polyfluoroalkyl group-not containing polyfunctional acrylate (IV) in the insulating material of the invention can optionally be selected in accordance with the desired viscosity, and dynamical physical properties and the like after curing, it is preferred from the viewpoint of curability, and the flexibility and the insulating performance in a high degree, which is an object of the invention, of the insulating material after curing that the composition rate by weight ratio is

(XI) : (I) + (III) + (IV) = 0.01 : 99.99 - 10000 : 1

(XI) + (I) : (III) + (IV) = 1 : 99 - 100 : 0and

(XI) : (I) = 0.01 : 99.99 -10000 : 1.

The fluorine-containing polymer (XI) of the invention can be prepared by a polymerization method known in the industry, for example, by a method such as radical polymerization or anionic polymerization, using heat, light, electron beam or radiation as a polymerization initiation energy, but industrially, radical polymerization using heat and/or light as a polymerization initiation energy is preferred. As the polymerization style in these polymerization method, any of mass polymerization, solution polymerization and emulsion polymerization can be adopted. When heat is utilized as a polymerization initiation energy, the polymerization can be carried out either without any catalyst or in the presence of a polymerization initiator such as azobisisobutyronitrile, benzoyl peroxide, t-butyl peroxy-2-ethylhexanoate or methyl ethyl ketone peroxide-cobalt naphthenate. When light such as ultraviolet ray is utilized, there can be used a so-called photopolymerization initiator known in the industry (for example, compounds shown by the aforementioned V-1 to 11, etc.) and, if necessary, a photosensitizer such as an amine compound or a phosphorus compound. Further, in these radical polymerizations, it is possible to adjust the polymerization degree of the fluorine-containing polymer (I) by further using a mercapto group-containing chain transfer agent such as lauryl mercaptan, octyl thioglycolate, gamma-mercaptopropyltrimethoxysilane or $C_8H_{17}CH_2CH_2SH$ according to necessity. When the polymerization is carried out by electron beam or radiation, it is not particularly needed to add a polymerization initiator, etc. Further, when the fluorine-containing polymer (XI) is obtained by solution polymerization, any solvent can be used without restriction so long as it has no bad influence on the polymerization reaction.

When, in the insulating material of the invention, the fluorine series monomer and the non-fluorine series monomer as the constitutive monomers of the fluorine-containing polymer (XI) are identical to the fluorine-containing monoacrylate (I-a) and the polyfluoroalkyl group-not containing monoacrylate (III), respectively, the resin composition of the invention can conveniently be obtained by sdiscontinuing the polymerization of the fluorine-containing polymer (XI) at a stage such that the unreacted fluorine series monomer and the non-fluorine series monomer remain and then adding thereto and mixing therewith respectively predetermined amounts of a fluorine-containing polyfunctional acrylate (I-b) and/or a polyfluoroalkyl group-not containing polyfunctional acrylate (IV).

As coupling agents, there can, for example, be mentioned those of silane series, titanium series and zirco-aluminate series. Particularly preferred among them are those of silane series such as dimethyldimethoxysilane, dimethyldiethoxysilane, methyltrimethoxysilane, dimethylvinylmethoxysilane, phenyltrimethoxysilane, gamma-chloropropyltrimethoxysilane, gamma-chloropropylmethyldimethoxysilane, gamma-aminopropyltriethoxysilane, gamma-mercaptopropyltrimethoxysilane, gamma-glycidoxypropyltrimethoxysilane, gamma-glycidoxypropylmethyldimethoxysilane, gamma-methacryloxypropylmethoxysilane, gamma-methacrylloxypropylmethyldimethoxysilane, gamma-acryloxypropylmethyltrimethoxysilane and gamma-acryloxypropylmethyldimethoxysilane.

As antifoaming agents, leveling agents surfactants and surface-improving agents to be used, those of fluorine series are preferred.

As antioxidants, there can, for example, be mentioned those of ionic series, phosphorus series, hindered phenol series and the like, and particularly preferred among them are those containing a thiol group and those of hindered phenol series.

As flame retardants, there can, for example, be mentioned flame retardants of bromo-series, zinc compounds, antimony series compounds and phosphorus series compounds and those in combination of two or more of them.

Examples of bromo-series flame retardants include decabromodiphenyl oxide, hexabromobenzene, hexabromocyclododecane, dodecachloropentacyclooctadeca-7,15-diene, tetrabromobisphenol A, tribromophenol, tetrabromophthalic anhydride, dibromoneopentyl glycol, etc.

Examples of zinc compounds include compounds of boric acid with zinc such as $3ZnO\text{-}2B_2O_3\text{-}3H_2O$ and $2ZnO\text{-}3B_2O_3\text{-}3.5H_2O$; compounds of molybdenum with zinc such as $ZnO\text{-}ZnMoO_4$ and $CaO\text{-}ZnMoO_4$; $Zn_3(PO_4)_2\text{-}4H_2O$; composite burned products of ZnO with MgO; ZnO; $ZnCO_3$; etc.

Examples of antimony series compounds include antimony trioxide, etc.

Further, for the purposes of plasticization of the insulating material of the invention and adjustment of the insulating performance, etc. of the insulator obtained therefrom, sthere can be used as an additive other than the above a non-polymerizable fluorine compound, for example, a fluorinated alcohol such as

$$HO\text{-}(CH_2)_r\text{-}C_sF_{2s+1}$$

(wherein r is an integer of 1 to 4 and s is an integer of 1 to 20); a fluorinated carboxylic acid such as

$$HOOC\text{-}(CH_2)_t\text{-}C_uF_{2u+1}$$

(wherein t is 0 or an integer of 1 to 4 and u is an integer of 1 to 20); a fluorinated polyether usually called fluorine oil; or a compound usually called fluorine series inactive liquid such as $N(C_4F_9)_3$, perfluorodecalin or $C_8F_{17}OC_4F_9$ or $C_9F_{20}$.

Further, it is possible to add, according to necessity, a solvent to the insulating material of the invention for the purpose of controlling its viscosity, coating suitability and the like. Although any solvent can be used

without extra restrction so long as it has no bad effect on the polymerization reactivity of the material, preferred in view of workability are, for example, alcohol solvents such as methanol, ethanol and isopropyl alcohol; ketone solvents such as acetone, methyl ethyl ketone and methyl isobutyl ketone; ester solvents such as methyl acetate, ethyl acetate and butyl acetate; chlorine series solvents such as chloroform, dichloroethane carbon tetrachloride; and low boiling solvents such as benzotrifluoride, chlorobenzotrifluoride, m-xylene hexafluoride, tetrachlorodifluoroethane, 1,1,2-trichloro-1,2,2-trifluoroethane and trichloromonofluoromethane. When a solvent is thus contained, a step becomes necessary to remove the solvent at ordinary temperature or, if necessary, with heating or under reduced pressure before initiation of the polymerization and curing. When the solvent is removed with heating, it is needed to control the temperature so that polymerization of the monomers and the like with the heating does not occur.

Further, as viscosity adjusting- or insulating performance controlling-additives other than the above, there can, for example, be mentioned acrylic resins, fluorine series resins, olefin resins (e.g. polyethylene, etc.), polyester resins, polyether resins, polysulfone resins, silicone resins, polyamide resins, polyimide resins, alkyd resins, melamine resins, urethane resins, polyimine resins, epoxy resins, phenol resins, urea resins, etc.

As coloring agents, there can, for example, be mentioned organic pigments, inorganic pigments, organic dyestuffs, etc.

Further, in view of enhancement of the insulating performance and economical efficiency, it is possible to add a powdery or granular matter such as carbon, silica, anhydrous silica, quartz, glass, rock, ceramic, zircon, calcium carbonate, magnesium oxide, calcium oxide, aluminum oxide, hydroxy aluminum titanium oxide, antimony oxide, calcijm silicate, silicone carbide, boron nitride, molybdenum disulfide, mica, clay, kaolin, talc or asbestos.

As methods for applying the insulating material of teh invention onto a substrate, there can be used various methods known in the industry, for example, a coating method using a brush, bar coater, roller brush, roll coater or the like; a spray coating method using an air spray or airless spray coating machine or the like; a flow coating method (flow coat) using a shower coater or curtain flow coater or the like; a dipping method; a casting method; a spinner coating method; or the like, and it is desirable that these methods are properly used in accordance with the material, shape, use or the like of the substrate.

Particularly, when the insulating material of the invention is applied onto an electric conductor to prepare an insulated electric wire, there can preferably be used a method which comprises dipping and then drawing up the electric conductor continuously into and from a storage tank containing the insulating material, removing the solvent according to necessity, and applying an actinic energy ray to form an insulated resin-coated layer; a method which comprises passing an electric wire conductor at the mouthpiece capable of continuously supplying the insulating material of the invention to carry out continuous coating, removing the solvent according to necessity, and applying an actinic energy ray to form an insulated resin-coated layer; or the like.

As conductors capable of being covered with the insualting material of the invention, any of the usual electric conductors can be used, and, for example, there can be used gold wire; copper wire; copper wire plated with nickel, silver, tin, lead or the like; silver wire; nickel wire; alloy wire for electric heating; alloy wire for electric resistance; iron wire; enameled wire; etc. Further, as their shapes, there can, for example, be mentioned circular wire, straight angular wire, profile wire, stranded wire, etc. Although the coat thickness of the insulating material of the invention to be applied onto a conductor is varied depending on the degree of insulating quality to be needed and economical efficiency, it is preferred that the coat thickness in terms of the cured product of the insulating material is 50 $\mu$m or less, particularly 15 to 50 $\mu$m. An electric wire covered with the cured product of the insulating material so tht the thickness becomes 50 $\mu$m or less is particularly suitable for electric wire for computers wherein minute wiring is necessitated.

When the insulating material of the invention is polymerized and cured by an actinic energy ray, there can be used ultraviolet ray from a light source such as a germicidal lamp, a fluorescent lamp for ultraviolet ray, carbon arc, a xenon lamp, a high pressure mercury lamp for copying, a moderate pressure or high pressure mercury lamp, an ultra-high pressure mercury lamp, an electrodeless lamp, a metal halide lamp or natural light; electron beam from a scanning type or curtain type electron beam acceleration path; or the like. In case of ultraviolet ray curing of the coating layer having a thickness of 5 $\mu$m or less, it is preferred to irradiate it in an atmosphere of an inert gas such as nitrogen gas.

The insulating material of the invention can be used for electronic apparatuses, electric apparatuses, etc. without any restriction, and, since the material necessarily contains fluorine atoms, the material has a characteristic that it is also possible to adjust the refractive index of the insulating material itself by varying the amount of the atoms. Therefore, the insulating material can preferably be used as a sealer, a potting agent and an adhesive for light sensors, light IC, light LSI and other optical parts which necessitate

insulating performance. Further, the material can preferably be used also as a sealer, a potting agent and an adhesive for electronic parts requiring moisture resistance in addition to insulating performance such as electronic circuit substrates, LSI, IC and relays.

Specific examples of the invention are described below, but it goes without saying that the invention is not limited at all by such description. "Part" in the description is based on weight.

Hereinafter, all the abbreviations of compounds indicate the aforementioned compounds. Further, in the abbreviations, A represents an acrylate compound, M represents a methacrylate compound, CL represents an alpha-chloroacrylate compound and CN represents an alpha-cyanoacrylate compound.

Synthetic example 1 (Synthesis of a copolymer)

180 g of I-a-1, 10 g of II-2, 10 g of n-butyl acrylate and 1 g of azobisisobutyronitrile (hereinafter referred to as AIBN) were weighed and placed in a 500-ml four-necked round bottom flask equipped with a cooling condenser, a thermometer and a stirrer, and the mixture was stirred at 70 °C for 30 minutes in an atmosphere of $N_2$ gas. While hot, the viscous mass polymerization product was taken off the system.

Its molecular weight determined by GPC was $\overline{Mn}$= 450,000 in terms of styrene. Its fluorine atom content was 56.1 %.

Synthetic example 2 (Synthesis of a copolymer)

A copolymer was synthesized in the same manner as in Example 1 except for I-a-47/II-I3 (m = 8)-/isobornyl acrylate = 60/20/20 (weight ratio). The molecular weight of this copolymer in terms of styrene determined by GPC was $\overline{Mn}$= 320,000.

Synthetic example 3 (Synthesis of a copolymer)

60 g of I-a-1, 5 g of adamantyl acrylate, 5 g of n-butyl acrylate, 0.02 g of octyl thioglycolate, 0.3 g of AIBN and 230 g of I,I,I-trichloroethane were weighed and placed in a 500-ml four-necked round flask equipped with a cooling condenser, a thermometer and a stirrer, and the mixture was subjected to reaction at 80 °C for 10 hours in an $N_2$ gas atmosphere. The solvent was distilele away under reduced pressure to obtain the desired polymerized product.

Its molecular weight determined by GPC was $\overline{Mn}$= 320,000 in terms of styrene.

Synthetic example 4 (Synthesis of a copolymer)

372 g of I-a-1, 28 g of cyclohexyl acrylate and 0.7 g of an initiator V-9 were weighed and placed in a 500-ml glass-made cylindrical flask equipped with a stirrer, and the mixture was subjected to reaction for 10 seconds with stirring at 60 °C while irradiated from the side by one high pressure mercury lamp of 80 W/cm. By this operation, a viscous reaction product having a viscosity of 8,600 cps/25 °C was obtained. The molecular weight by GPC of the polymer in the reaction products was 110,000, and the rate of the remaining unreacted monomer was 76 % of the whole weight. Further, it was ascertained by NMR that the copolymerization composition ratio of the polymer accorded with the ratio of the charged monomers.

Synthetic examples 5 and 6

The viscosity of the reaction product synthesized in the same manner as in Synthetic example 4, the molecular weight of the polymer, and the rate of the remaining unreacted monomer were shown together in Table 1.

Table 1

| Synthetic example | Polymerization composition (%) | Viscosity (cps/25°C) | Amount of the remaining unreacted monomer (%) | Molecular weight $\overline{Mn}$ in terms of styrene |
|---|---|---|---|---|
| 5 | I-a-52/isobornyl methacrylate<br>20 / 70 | 9.400 | 70 | 18 |
| 6 | I-a-35/I-a-33/I-a-31/t-Butyl acrylate<br>20 / 40 / 32 / 8 | 8.100 | 69 | 41 |

Synthetic example 7 (Synthesis of a copolymer)

120 g of methyl isobutyl ketone and 120 g of metaxylene hexafluoride were weighed and placed in a 2 liter-four-necked round flask equipped with a cooling condenser and a stirrer, and, after heating to 110 °C, a mixture of 340 g of I-a-1, 60 g of glycidyl methacrylate and 12 g of t-butyl peroxy-2-ethylhexanoate was added dropwise over a period of 3 hours using a dropping funnel, followed by further one hour reaction. Then, a uniform mixture of 2 g of t-butyl peroxy-2-ethylhexanoate and 26 g of methyl isobutyl ketone was added dropwise over a period of 1 hour, and the mixture was further subjected to reaction for further 7

hours to obtain a copolymer of a molecular weight $\overline{Mn}$ = 15,000. To this was added 0.2 g of hydroquinone, 2 g of triethylamine and 32 g of acrylic acid were added, and the mixture was subjected to reaction at 110 °C for 5 hours to obtain a fluorine-containing resin which has a molecular weight $\overline{Mn}$ = 16,000 and an unsaturation degree of 1.0 and contains acryloyl groups at the side chains. The solvents of this resin solution were distilled away under reduced pressure at 40 °C to obtain a fluorine-containing resin having a solid content of 100 %.

Examples 1 to 38

Electrical properties of the insulating material of the invention were shown in Table 2.

Its dielectric breakdown voltage, volume resistivity coefficient and dielectric constant were measured according to the methods of ASTM D149 and D257, respectively. The test samples were prepared by irradiating each of the insulating materials of the specific examples using one light-concentrating type high pressure mercury lamp of 120 W/cm to cure it and ascertaining the disappearance of the carbon-carbon double bond groups by an infrared spectroscope.

In this connection, when an insulating material of the invention was cured by heating, the resulting product exhibited the similar electric properties to that cured by an actinic energy ray. However, the case of curing by the actinic energy ray was superior to the case of curing by heating in all of workability, productivity and economic efficiency.

Comparative examples 1 to 12

The same manipulations as in the above examples were carried out except for use of test samples indicated in Table 2. The results were shown in Table 2, too.

Table 2

| Example | Insulative material | (part) | Electric properties: Dielectric breakdown voltage (kV/mm) | Electric properties: Volume resistivity coefficient (ohm.cm) | Electric properties: Dielectric constant |
|---|---|---|---|---|---|
| 1 | I-a-35<br>IV-17 (A)<br>Gamma-mercaptopropyltrimethoxysilane<br>V-9 | 85.6<br>11.4<br>2.0<br>1.0 | 31 | $2.0 \times 10^{17}$ | 2.0 |
| 2 | I-a-35<br>IV-17 (A)<br>V-9 | 84.0<br>15.0<br>1.0 | 30 | $1.8 \times 10^{17}$ | 2.0 |
| 3 | I-a-35<br>IV-17 (A)<br>V-9 | 15.0<br>84.0<br>1.0 | 27 | $7.9 \times 10^{16}$ | 2.4 |
| 4 | I-a-35<br>IV-17 (A)<br>V-9 | 4.3<br>94.7<br>1.0 | 23 | $9.5 \times 10^{15}$ | 2.5 |
| 5 | I-a-35<br>IV-17 (A)<br>V-9 | 68.0<br>30.0<br>2.0 | 40 | $4.4 \times 10^{17}$ | 2.3 |

(continued)

Table 2 (continued)

| Example | Insulative material | (part) | Electric properties | | |
|---|---|---|---|---|---|
| | | | Dielectric breakdown voltage (kV/mm) | Volume resistivity coefficient (ohm.cm) | Dielectric constant |
| 6 | I-a-1<br>I-b-1<br>V-9 | 4.9<br>90.1<br>5.0 | 43 | $6.5 \times 10^{17}$ | 2.1 |
| 7 | I-a-1<br>IV-17 (A)<br>V-9 | 4.9<br>90.1<br>5.0 | 23 | $5.6 \times 10^{15}$ | 2.3 |
| 8 | I-a-1<br>IV-17 (A)<br>V-9 | 50.0<br>47.0<br>3.0 | 32 | $6.9 \times 10^{16}$ | 2.2 |
| 9 | I-a-1<br>IV-17 (A)<br>V-9 | 93.0<br>5.0<br>2.0 | 34 | $1.2 \times 10^{17}$ | 2.0 |
| 10 | I-a-1<br>Isobornyl acrylate<br>IV-17 (A)<br>V-9 | 70.0<br>15.0<br>10.0<br>5.0 | 35 | $9.7 \times 10^{16}$ | 2.0 |

(continued)

Table 2 (continued)

| Example | Insulative material | (part) | Electric properties | | |
|---|---|---|---|---|---|
| | | | Dielectric breakdown voltage (kV/mm) | Volume resistivity coefficient (ohm.cm) | Dielectric constant |
| 11 | I-a-1<br>2-Ethylhexyl acrylate<br>V-9 | 70.0<br>25.0<br>5.0 | 29 | $2.7 \times 10^{16}$ | 2.0 |
| 12 | I-a-1<br>II-13 (m=8)<br>IV-17<br>V-9 | 70.0<br>18.0<br>10.0<br>2.0 | 33 | $1.2 \times 10^{17}$ | 2.0 |
| 13 | I-a-1<br>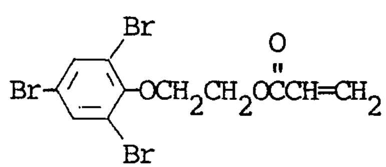<br>IV-17<br>V-9 | 70.0<br>18.0<br>10.0<br>2.0 | 34 | $1.7 \times 10^{17}$ | 2.1 |

(continued)

Table 2 (continued)

| Example | Insulative material | (part) | Electric properties | | |
|---|---|---|---|---|---|
| | | | Dielectric breakdown voltage (kV/mm) | Volume resistivity coefficient (ohm.cm) | Dielectric constant |
| 14 | I-a-1<br>I-a-22<br>IV-17 (A)<br>V-9 | 50.0<br>30.0<br>15.0<br>5.0 | 28 | $9.3 \times 10^{16}$ | 1.9 |
| 15 | $CH_2=CHCOOCH_2CF_3$<br>I-a-5<br>IV-20 (A)<br>V-8 | 50.0<br>60.0<br>8.0<br>2.0 | 30 | $8.4 \times 10^{16}$ | 2.1 |
| 16 | I-a-1<br>Isobornyl acrylate<br>IV-17 (A)<br>Mica powder (average grain size: 1μm)<br>V-9 | 70.0<br>7.0<br>8.0<br>10.0<br>5.0 | 38 | $2.0 \times 10^{17}$ | 2.3 |
| 17 | I-a-1<br>I-a-47<br>IV-9 (A)<br>V-9 | 55.0<br>33.0<br>10.0<br>2.0 | 28 | $7.6 \times 10^{16}$ | 2.4 |

(continued)

Table 2 (continued)

| Example | Insulative material | (part) | Electric properties | | |
|---|---|---|---|---|---|
| | | | Dielectric breakdown voltage (kV/mm) | Volume resistivity coefficient (ohm.cm) | Dielectric constant |
| 18 | VI-9<br>1,6-Hexanediol glycidyl ether<br>X-2 | 80.0<br>17.0<br>3.0 | 33 | $5.5 \times 10^{16}$ | 2.2 |
| 19 | VI-11<br>1,6-Hexanediol glycidyl ether<br>X-2 | 90.0<br>7.0<br>3.0 | 36 | $7.0 \times 10^{16}$ | 2.1 |
| 20 | VI-11<br>VII-8<br>X-21 | 40.0<br>57.0<br>3.0 | 39 | $9.9 \times 10^{16}$ | 2.4 |
| 21 | VII-1<br>VI-2<br>X-2 | 90.0<br>6.0<br>4.0 | 38 | $8.7 \times 10^{16}$ | 2.4 |

(continued)

Table 2 (continued)

| Example | Insulative material | (part) | Electric properties | | |
|---|---|---|---|---|---|
| | | | Dielectric breakdown voltage (kV/mm) | Volume resistivity coefficient (ohm.cm) | Dielectric constant |
| 23 | VII-1<br>VI-13<br>X-2 | 70.0<br>26.0<br>4.0 | 31 | $1.0 \times 10^{16}$ | 2.2 |
| 24 | VI-4<br>VII-6<br>X-2 | 45.0<br>50.0<br>5.0 | 34 | $3.8 \times 10^{16}$ | 2.1 |
| 25 | VI-11<br>1,6-Hexanediol glycidyl ether<br>Mica (average grain size: 2.0 µm)<br>X-21 | 84.0<br>7.0<br>6.0<br>3.0 | 38 | $7.0 \times 10^{16}$ | 2.1 |
| 26 | Compound of Synthetic example 1<br>I-a-1<br>IV-17 (A)<br>V-9 | 10.0<br>45.0<br>42.0<br>3.0 | 36 | $7.3 \times 10^{16}$ | 2.2 |

(continued)

Table 2 (continued)

| Example | Insulative material | (part) | Electric properties: Dielectric breakdown voltage (kV/mm) | Electric properties: Volume resistivity coefficient (ohm.cm) | Electric properties: Dielectric constant |
|---|---|---|---|---|---|
| 27 | Compound of Synthetic example 1<br>I-a-23<br>IV-9(A)<br>V-9 | 60.0<br>16.0<br>20.0<br>4.0 | 47 | $7.7 \times 10^{17}$ | 2.0 |
| 28 | Compound of Synthetic example 2<br>I-a-1<br>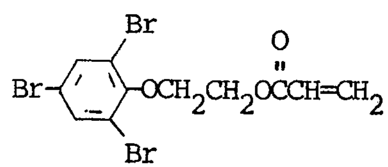<br>IV-17 (A)<br>V-9 | 20.0<br>56.0<br>14.0<br>8.0<br>2.0 | 36 | $2.6 \times 10^{17}$ | 2.0 |
| 29 | Compound of Synthetic example 3<br>$CH_2=CHCOOCH_2CF_3$<br>I-a-5<br>IV-20 (A)<br>V-8 | 10.0<br>27.0<br>54.0<br>7.0<br>2.0 | 35 | $1.0 \times 10^{17}$ | 2.0 |

(continued)

Table 2 (continued)

| Example | Insulative material | (part) | Electric properties: Dielectric breakdown voltage (kV/mm) | Electric properties: Volume resistivity coefficient (ohm.cm) | Electric properties: Dielectric constant |
|---|---|---|---|---|---|
| 30 | Reaction product of Synthetic example 4<br>IV-17 (A)<br>V-9 | 80.0<br>15.0<br>5.0 | 37 | $1.6 \times 10^{17}$ | 2.1 |
| 31 | Reaction product of Synthetic exampled 5<br>Phenoxyethyl acrylate<br>IV-8 (A) (average molecular weight 200)<br>V-9 | 70.0<br>12.0<br>12.0<br>6.0 | 29 | $1.0 \times 10^{17}$ | 2.0 |
| 32 | Reaction product of Synthetic exampled 6<br>IV-17 (A)<br>V-9 | 82.0<br>15.0<br>3.0 | 29 | $1.8 \times 10^{17}$ | 2.1 |
| 33 | Reaction product of Synthetic example 7<br>I-a-1<br>I-a-28<br>V-9 | 50.0<br>40.0<br>7.0<br>3.0 | 22 | $6.0 \times 10^{16}$ | 2.1 |

(continued)

Table 2 (continued)

| Example | Insulative material | (part) | Electric properties | | |
|---|---|---|---|---|---|
| | | | Dielectric breakdown voltage (kV/mm) | Volume resistivity coefficient (ohm.cm) | Dielectric constant |
| 34 | Reaction product of Synthetic example 7<br>I-a-1<br>I-a-47<br>IV-9 (A)<br>V-9 | 30.0<br>39.0<br>23.0<br>6.0<br>2.0 | 31 | $9.0 \times 10^{16}$ | 2.2 |
| 35 | Poly(vinylidene fluoride)<br>(Molecular weight 10,000)<br>I-a-1<br>I-a-22<br>IV-17 (A)<br>V-9 | 10.0<br><br>45.0<br>27.0<br>14.0<br>4.0 | 32 | $2.2 \times 10^{17}$ | 2.0 |

(continued)

Table 2 (continued)

| Example | Insulative material | (part) | Electric properties: Dielectric breakdown voltage (kV/mm) | Electric properties: Volume resistivity coefficient (ohm.cm) | Electric properties: Dielectric constant |
|---|---|---|---|---|---|
| 36 | 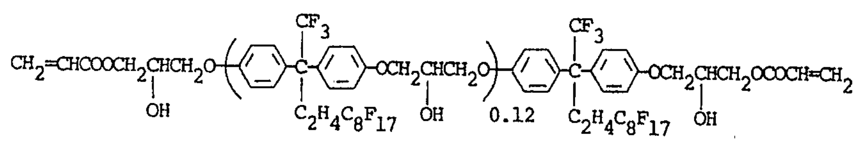<br>I-a-1<br>V-9 | 86.0<br><br>10.0<br>4.0 | 33 | $1.5 \times 10^{17}$ | 2.2 |
| 37 | $CH_2{=}CHCOOR^1NHCOOCH_2CF_2O{-}(CF_2CF_2O)_5{-}(CF_2O)_5{-}CF_2CH_2OCONHR^1OCOCH{=}CH_2$<br>$R^1$ = 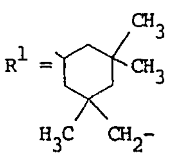<br>I-a-15<br>V-9 | 86.0<br><br>10.0<br>4.0 | 35 | $7.8 \times 10^{16}$ | 2.4 |

(continued)

Table 2 (continued)

| Example | Insulative material | (part) | Electric properties: Dielectric breakdown voltage (kV/mm) | Electric properties: Volume resistivity coefficient (ohm.cm) | Electric properties: Dielectric constant |
|---|---|---|---|---|---|
| 38 | 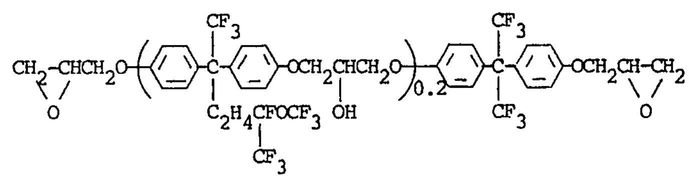 | 86.0 | 28 | $2.0 \times 10^{16}$ | 2.4 |
| | VII-1 | 10.0 | | | |
| | X-2 | 4.0 | | | |

(continued)

Table 2 (continued)

| Comparative example | Insulative material | (part) | Electric properties | | |
|---|---|---|---|---|---|
| | | | Dielectric breakdown voltage (kV/mm) | Volume resistivity coefficient (ohm.cm) | Dielectric constant |
| 1 | $n-C_{11}H_{21}OCOCH=CH_2$<br>IV-17 (A)<br>V-9 | 84.0<br>15.0<br>1.0 | 12 | $7.3 \times 10^{12}$ | 3.9 |
| (Corresponding to Example 2) | | | | | |
| 2 | $n-C_{11}H_{21}OCOCH=CH_2$<br>IV-17 (A)<br>Gamma-mercaptopropyltrimethoxysilane<br>V-9 | 85.6<br>11.4<br>2.0<br>1.0 | 13 | $6.6 \times 10^{12}$ | 3.8 |
| (Corresponding to Example 1) | | | | | |
| 3 | n-Decyl acrylate<br>IV-17 (A)<br>V-9 | 50.0<br>47.0<br>3.0 | 15 | $1.1 \times 10^{13}$ | 3.6 |
| (Corresponding to Example 8) | | | | | |
| 4 | n-Decyl acrylate<br>Isobornyl acrylate<br>IV-17 (A)<br>V-9 | 70.0<br>15.0<br>10.0<br>5.0 | 14 | $7.0 \times 10^{12}$ | 3.7 |
| (Corresponding to Example 10) | | | | | |

(continued)

Table 2 (continued)

| Comparative example | Insulative material | (part) | Electric properties: Dielectric breakdown voltage (kV/mm) | Electric properties: Volume resistivity coefficient (ohm.cm) | Electric properties: Dielectric constant |
|---|---|---|---|---|---|
| 5 | n-Decyl acrylate<br>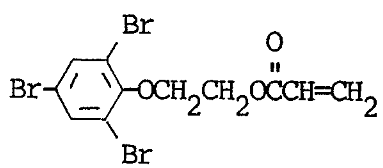<br>IV-17<br>V-9 | 70.0<br>18.0<br>10.0<br>2.0 | 13 | $6.3 \times 10^{12}$ | 3.7 |
| (Corresponding to Example 13) | | | | | |
| 6 | n-Decyl alcohol<br>1,6-Hexanediol diglycidyl ether<br>X-2 | 80.0<br>17.0<br>3.0 | 13 | $1.8 \times 10^{12}$ | 3.5 |
| (Corresponding to Example 18) | | | | | |
| 7 | Polytetrafluoroethylene | | 20 | $1.0 \times 10^{17}$ | 2.1 |
| (Usual process) | | | | | |

(continued)

Table 2 (continued)

| Comparative example | Insulative material | (part) | Electric properties: Dielectric breakdown voltage (kV/mm) | Electric properties: Volume resistivity coefficient (ohm.cm) | Electric properties: Dielectric constant |
|---|---|---|---|---|---|
| 8 | I-b-2<br>V-9 | 98.0<br>2.0 | 20 | $5.0 \times 10^{14}$ | 2.9 |
| 9 | I-b-1<br>V-9 | 95.0<br>5.0 | 21 | $7.8 \times 10^{14}$ | 3.0 |
| 10 (Corresponding to Example 36) | 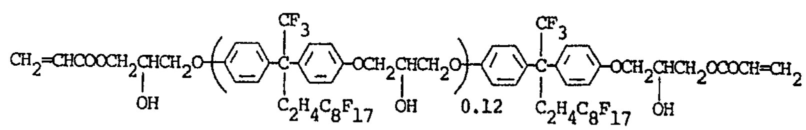<br>V-9 | 96.0<br><br>4.0 | 18 | $3.3 \times 10^{14}$ | 3.2 |
| 11 (Corresponding to Example 37) | $CH_2=CHCOOR^1NHCOOCH_2CF_2O-(CF_2CF_2O)_5-(CF_2O)_5-CF_2CH_2OCONHR^1OCOCH=CH_2$<br>$R^1$ = 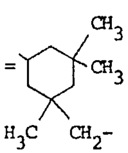<br>V-9 | 96.0<br><br>4.0 | 16 | $1.2 \times 10^{14}$ | 3.3 |

(continued)

Table 2 (continued)

| Example | Insulative material | (part) | Electric properties: Dielectric breakdown voltage (kV/mm) | Electric properties: Volume resistivity coefficient (ohm.cm) | Electric properties: Dielectric constant |
|---|---|---|---|---|---|
| 12 | 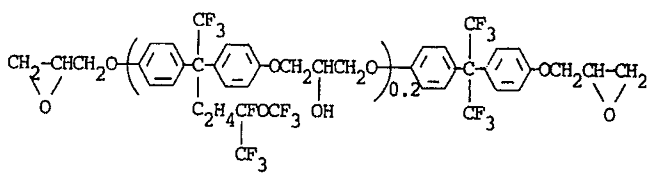 | 96.0 | 19 | $6.2 \times 10^{14}$ | 3.5 |
| | X-2 | 4.0 | | | |

(Corresponding to Example 38)

Examples 39 to 75 and Comparative examples 13 to 21

Each of the insulating materials indicated in Examples 1 to 39 was supplied into a coat die, through which a nickel-plated circular copper wire having an outer diameter of 0.900 mm was placed, to coat the wire, and the resulting coated wire was passed through an ultraviolet curing oven equipped with two metal halide lamps each having an output of 120 W/cm to obtain a covered electric wire.

An electric wire covered with the hot-melt fluororesins indicated in Ccmparative example 7 was obtained by introducing the corresponding fluorine series resin into an extruder having the following temperatures and diameter, and extruding it onto the same conductor as above having an outer diameter of 0.900 mm so that the outer diameter became 0.980 mm to cover the conductor.

The temperature of the barrel band region 1: 260 °c, the temperature of the barrel band region 2: 270 °C, the temperature of the barrel region 3: 300 °C, the temperature of the head: 320 °C, the temperature of the die part: 320 °C, 40 mm, L/D = 20

As apparent from the above conditions, the hot-melt fluororesin has a high melting point, and was inferior to the case where the insulating materials of the invention were cured with the actinic energy ray, in all of the workability, productivity and economical efficiency.

In Table 3, the numbers of the column of insulating material indicate the resin compositions corresponding to the numbers of teh examples in Table 2. The line speed indicates production speed per one resin-covered electric wire (linear coating speed). The appearance of the resin-covered electric wire and judgement of pinholes were determined according to JIS C2358 and JIS C3203, respectively.

Table 3

| Example | Insulating material | Line speed (W/min.) | Appear-ance | Pinhole |
|---|---|---|---|---|
| 39 | Example 1 | 20 | Good | No |
| 40 | " 1 | 150 | " | " |
| 41 | " 1 | 250 | " | " |
| 42 | " 2 | 200 | " | " |
| 43 | " 3 | 200 | " | " |
| 44 | " 4 | 200 | " | " |
| 45 | " 5 | 200 | " | " |
| 46 | " 6 | 200 | " | " |
| 47 | " 7 | 200 | " | " |
| 48 | " 8 | 200 | " | " |
| 49 | " 9 | 200 | " | " |
| 50 | " 10 | 200 | " | " |
| 51 | " 11 | 200 | " | " |
| 52 | " 12 | 200 | " | " |
| 53 | " 13 | 200 | " | " |
| 54 | " 14 | 200 | " | " |
| 55 | " 15 | 200 | " | " |
| 56 | " 17 | 250 | " | " |
| 57 | " 18 | 150 | " | " |
| 58 | " 19 | 150 | " | " |
| 59 | " 20 | 100 | " | " |
| 60 | " 23 | 150 | " | " |
| 61 | " 24 | 150 | " | " |
| 62 | " 25 | 150 | " | " |
| 63 | " 26 | 300 | " | " |
| 64 | " 27 | 300 | " | " |
| 65 | " 28 | 300 | " | " |
| 66 | " 29 | 300 | " | " |
| 67 | " 30 | 300 | " | " |
| 68 | " 31 | 300 | " | " |
| 69 | " 32 | 300 | " | " |
| 70 | " 33 | 300 | " | " |
| 71 | " 34 | 300 | " | " |
| 72 | " 35 | 300 | " | " |
| 73 | " 36 | 100 | " | " |
| 74 | " 37 | 100 | " | " |
| 75 | " 38 | 100 | " | " |

(continued)

Table 3 (continued)

| Comparative example | Insulating material | Line speed (W/min.) | Appearance | Pinhole |
|---|---|---|---|---|
| 13 | Comparative example 2 | 150 | Not good | Many |
| 14 | Comparative example 6 | 80 | " | " |
| 15 | Polytetrafluoroethylene | 5 | " | " |
| 16 | Tetrafluoroethylene-propylene copolymer | 5 | Good | No |
| 17 | " | 10 | Not good | Many |
| 18 | Comparative example 10 | 100 | " | " |
| 19 | Comparative example 10 | 80 | " | " |
| 20 | Comparative example 11 | 100 | " | " |
| 21 | Comparative example 12 | 100 | " | " |

Example 76

The insulating material of Example 31 (the light transmittance of the chip after curing having a thickness of 1 mm: 92 % (850 nm), refractive index: $n_D^{25}$ = 1.465) was potted on a light IC chip carried on a glass substrate, and cured with application of the light from one high pressure mercury lamp of 80 W/cm for 2 seconds. When the potted light IC chip was held for 1,000 hours under an applied voltage of 20 V in a constant temperature and constant moisture bath of 70°C X 95 % RH, there was no razing and peeling of the potted part and no corrosion was observed on the circuit. Further, performances thereof as a light IC chip were far superior to those of a light IC chip sealed by a usual potting agent.

As is apparent from the above Examples, insulating materials of the invention are excellent in coating suitability, curability and insulating property, and, among them, actinic energy ray-curable insulating materials are good further in productivity and economical efficiency and can insulate and coat conductors of every shape and form. Especially, when the insulating materials are applied as an insulating material for resin-covered electric wires, thin coat-insulated electric wires, whose production has hitherto been extremely difficult, can be prepared in good productivity, economical efficiency and reliability.

## Claims

1. A curable insulating material comprising a polyfluoroalkyl group-containing ethylenically mono alpha, beta-unsaturated monomer or a polyfluoroalkyl group-containing monoepoxy monomer.

2. A curable insulating material according to claim 1 which further comprises a polyfluoroalkyl group-containing polymer or a polyfluoroalkylene group-containing polymer.

3. A curable insulating material according to claim 1 which comprises a polyfluoroalkyl group-containing ethylenically mono alpha,beta-unsaturated monomer and an ethylenically poly alpha,beta-unsaturated monomer.

4. The curable insulating material according to claim 3 wherein the ethylenically poly alpha,beta-unsaturated monomer contains a polyfluoroalkyl group or a polyfluoroalkylene group.

5. A curable insulating material according to claim 3 or 4 which further comprises a polymer of a polyfluoroalkyl group-containing ethylenically mono alpha,beta-unsaturated monomer or a polymer of a polyfluoroalkylene group-containing ethylenically mono alpha,beta-unsaturated monomer.

6. A curable insulating material according to claim 5 wherein the said polymer is a (co)polymer of the

corresponding monomer.

7. A curable insulating material according to claim 1 which comprises a polyfluoroalkyl group-containing monoepoxy monomer and a polyepoxymonomer.

8. A curable insulating material according to claim 7 wherein the polyepoxy monomer contains a polyfluoroalkyl group or a polyfluoroalkylene group.

9. A curable insulating material according to claim 7 or 8 which further comprises a polymer of a polyfluoroalkyl group-containing monoepoxy monomer or a polymer of a polyfluoroalkylene group-containing monoepoxy monomer.

10. The curable insulating material according to claim 9 wherein the said polymer is a (co)polymer of the corresponding monomer.

11. A process for the preparation of an insulated covered electric wire which comprises coating an electric wire conductor with a curable insulating material as claimed in claim 1, and then irradiating the coat with an actinic energy ray or heating the coat to cure the material.

12. An insulated covered electric wire which comprises an electric wire covered with the cured product of a material as claimed in any one of claims 1 to 10.